# EUROPEAN PATENT APPLICATION

(11) **EP 4 142 218 A1**
(43) Date of publication of application: **01.03.2023**
(21) Application number: 21807768.3
(22) Date of filing: 10.05.2021
(51) Int. Cl.: H04L 12/24, H04W 24/02, H04W 76/10

(54) **SLICE ACCESS METHOD, DEVICE AND SYSTEM**

(30) Priority: 21.05.2020 CN 202010437050
(71) Applicant: Huawei Technologies Co., Ltd., Shenzhen, Guangdong 518129 (CN)
(72) Inventor: DING, Hui, Shenzhen, Guangdong 518129 (CN); LI, Zhuoming, Shenzhen, Guangdong 518129 (CN)
(74) Representative: Huawei European IPR
(86) International application number: PCT/CN2021/092614
(87) International publication number: WO 2021/233148

(57) **Abstract**

This application relates to the field of communication technologies, and provides a slice access method, apparatus, and system, to reduce a probability that a terminal service fails because a slice that is not suitable for a current to-be-initiated service is matched. The slice access method includes: receiving one or more user route selection policy rules URSP rules from a network apparatus, and performing URSP matching according to the one or more URSP rules. At least one URSP rule in the URSP rules includes indication information, and the indication information indicates to match one or more preset URSP rules or match one or more preset route selection descriptors RSDs. The method is applied to a network slice access procedure.

## Description

This application claims priority to Chinese Patent Application No. 202010437050.1, filed with the China National Intellectual Property Administration on May 21, 2020 and entitled "SLICE ACCESS METHOD, APPARATUS, AND SYSTEM", which is incorporated herein by reference in its entirety.

### TECHNICAL FIELD

This application relates to the field of communication technologies, and in particular, to a slice access method, apparatus, and system.

### BACKGROUND

To meet differentiated network requirements in a 5th generation (5th generation, 5G) mobile communication system, the 3rd generation partnership project (3rd generation partnership project, 3GPP) proposes a network slice (network slice) technology. A physical network is divided into a plurality of logical networks. A network slice is a combination of one or more of the logical networks. A terminal may access the network slice, and execute services by using the network slice (the logical networks).

Currently, the terminal mainly determines, based on a matching result of a user route selection policy (user route selection policy, URSP), slices that need to be used for a current service. Specifically, the terminal determines, according to one or more URSPs, single network slice selection assistance information (single network slice selection assistance information, S-NSSAI) corresponding to a slice that needs to be used by the service, and determines whether the S-NSSAI is included in allowed network slice selection assistance information (allowed network slice selection assistance information, allowed NSSAI) of a current network. If S-NSSAI indicated by a current URSP does not appear in the allowed NSSAI, or a session establishment request initiated by the terminal device based on the S-NSSAI is rejected by a network side, and a rejection cause value indicates that the UE is not supported in accessing the S-NSSAI. Then the terminal continues to perform URSP matching based on a URSP priority until it is determined that S-NSSAI (referred to as target S-NSSAI) indicated by a URSP applicable to the service appears in the allowed NSSAI and is accepted by the network side. Alternatively, when none of S-NSSAI indicated by all non-wildcard URSPs matching a current to-be-initiated service is in the allowed NSSAI or is not accepted by the network side, the terminal determines, by using S-NSSAI indicated by a wildcard URSP and the allowed NSSAI, which slice needs to be used.

In the foregoing case, although the terminal can determine which slice needs to be used, because a slice that the UE actually needs to access may not be deployed in a current area of a current access network, the finally determined target S-NSSAI or the S-NSSAI indicated by the wildcard URSP probably does not meet service requirements of the terminal.

### SUMMARY

Embodiments of this application provide a slice access method, apparatus, and system, to reduce a probability that a terminal service fails because a slice that is not suitable for a current to-be-initiated service is matched.

To achieve the foregoing objectives, the following technical solutions are used in embodiments of this application.

According to a first aspect, an embodiment of this application provides a slice access method, and the method is performed by a terminal apparatus. The terminal apparatus may be a terminal device, or may be a component (for example, a chip system) in the terminal device. The method includes:
receiving one or more user route selection policy rules URSP rules from a network apparatus, and performing URSP matching according to the one or more URSP rules. At least one URSP rule in the URSP rules includes indication information, and the indication information indicates to match one or more preset URSP rules or match one or more preset route selection descriptors RSDs.

That the indication information indicates to match one or more preset URSP rules means that only one or more preset URSP rules are matched, and a URSP rule other than the preset URSP rule is not matched. Similarly, that the indication information indicates to match one or more preset RSDs means that only one or more preset RSDs are matched, and an RSD other than the preset RSD is not matched.

By using the foregoing slice access method, a terminal may receive indication information from a network apparatus, to trigger URSP matching when a service needs to be initiated, and match only a preset URSP indicated by the indication information, or may not match a preset URSP indicated by the indication information. In this way, a quantity of URSPs that need to be matched can be reduced, and a probability that a terminal service fails because matched slice information is not suitable for a service because the URSP is always matched and a PDU session established based on the slice information cannot support a service that needs to be initiated can be reduced.

In a possible design, the performing URSP matching according to the one or more URSP rules includes:
stopping URSP matching if none of one or more pieces of single network slice selection assistance information S-NSSAI corresponding to a URSP rule that is in the one or more preset URSP rules and that matches a current to-be-initiated service is supported by a first network; or stopping URSP matching if none of one or more pieces of S-NSSAI corresponding to an RSD that matches a current to-be-initiated service and that is in the one or more preset RSDs is supported by a first network.

The URSP rule includes one or more RSDs, and the RSD includes S-NSSAI.

That the S-NSSAI is not supported by a first network means that the S-NSSAI is not in allowed NSSAI of the first network. Alternatively, although the S-NSSAI is in the allowed NSSAI, the allowed NSSAI received by the terminal apparatus may not be updated. Alternatively, after initiating a PDU session establishment request, the terminal apparatus receives a rejection cause value from a network side, and the cause value indicates that the S-NSSAI does not support access temporarily, or Alternatively, there is another case in which the S-NSSAI is not supported by the first network. The first network refers to a current access network of the terminal.

In a possible design, the method further includes: accessing a second network by using a mobility change procedure, and requesting at least one of the one or more pieces of S-NSSAI in the second network.

The second network is a network that supports the at least one of the one or more pieces of S-NSSAI.

Specifically, the terminal apparatus hands over from the first network to the second network or registers with the second network by using the mobility change procedure.

In addition, it is different from a regular mobility management procedure that, in this embodiment of this application, after accessing the second network, the terminal apparatus may alternatively request, in the second network by using the following registration procedure, to access at least one of the one or more pieces of S-NSSAI (that is, access required by a service), to access at least one required slice.

Specifically, if the foregoing handover manner is used, the terminal apparatus first performs handover, and then triggers a registration procedure with the second network after the terminal apparatus is handed over from the first network to the second network. Alternatively, if the foregoing registration manner is used, the terminal apparatus directly registers with the second network from the first network by using a registration procedure. In the registration procedure with the second network, the terminal apparatus may send a registration request to the second network, where the registration request message includes requested NSSAI. The requested NSSAI includes the at least one of the foregoing one or more pieces of S-NSSAI, that is, includes at least one piece of required S-NSSAI. For example, the terminal apparatus matches only S-NSSAI-1 to S-NSSAI-3 in URSP 1, and none of the three pieces of S-NSSAI are in the allowed NSSAI of the first network. requested NSSAI sent by the terminal apparatus to the second network includes at least one of S-NSSAI-1 to S-NSSAI-3. Optionally, the registration procedure may be further used to update information such as context information of UE in the second network.

By using the foregoing mobility change method, when a session parameter is selected for a PDU session, in addition to information such as the URSP rule and the allowed NSSAI, information about whether a surrounding network of a current location of the UE supports a required slice is also referred to. In addition, it can be determined whether to trigger a mobility change procedure to an adjacent network. In this way, the terminal apparatus may access the required slice (that is, at least one of slices respectively corresponding to S-NSSAI-1 to S-NSSAI-3) via the second network, and establish a PDU session in the required slice. Because required slice information (including information such as S-NSSAI and a DNN) is determined based on service information in a URSP matching procedure, the PDU session established based on the required slice information can meet a service requirement of the terminal apparatus. This reduces a probability of a service failure caused by matching of slice information that is not suitable for a service by the terminal apparatus.

In a possible design, the method further includes: obtaining network selection assistance information, where the network selection assistance information includes one or more pieces of the following information:
information about one or more networks that support one or more slices in a target slice set, one or more priorities of the one or more networks, and network slice information respectively supported by the one or more networks.

The target slice set is one or more slices corresponding to target NSSAI, and the target NSSAI includes one or more of the following: NSSAI corresponding to a network slice requested by a terminal apparatus, NSSAI corresponding to a network slice that rejects access of the terminal apparatus, and NSSAI corresponding to a network slice that allows access of the terminal apparatus.

In a possible design, the terminal apparatus performs the mobility change procedure based on one or more of the following information: local configuration, detected broadcast information, and network selection assistance information.

According to a second aspect, an embodiment of this application provides a slice access method, and the method is performed by a network apparatus. The network apparatus may be a network device, or may be a component (for example, a chip system) in the network device. The method includes:
determining indication information, and sending the indication information to a terminal apparatus. The indication information indicates to match one or more preset URSP rules or match one or more preset route selection descriptors RSDs.

In a possible design, that the network apparatus determines indication information includes: determining the indication information based on one or more pieces of the following information: user subscription information, a location of the terminal apparatus, and pre-configuration information.

In a possible design, the sending the indication information to a terminal apparatus includes: sending one or more URSP rules to the terminal apparatus, where at least one of the one or more URSP rules includes the indication information.

In a possible design, the method further includes:
obtaining target NSSAI; and determining network selection assistance information based on the target NSSAI, and sending the network selection assistance information to the terminal apparatus.

The network selection assistance information includes one or more pieces of the following information: information about one or more networks that support one or more slices in a target slice set, one or more priorities of the one or more networks, and network slice information respectively supported by the one or more networks.

The target slice set is one or more slices corresponding to target NSSAI, and the target NSSAI includes one or more of the following: NSSAI corresponding to a network slice requested by a terminal apparatus, NSSAI corresponding to a network slice that rejects access of the terminal apparatus, and NSSAI corresponding to a network slice that allows access of the terminal apparatus.

According to a third aspect, an embodiment of this application provides a slice access apparatus. The apparatus is the foregoing terminal apparatus. The terminal apparatus may be a terminal device, or may be a component (for example, a chip system) in the terminal device. The apparatus includes a communication interface, and a processor. The communication interface is configured to receive one or more user route selection policy rules URSP rules from a network apparatus, where at least one URSP rule of the URSP rules includes indication information, and the indication information indicates to match one or more preset URSP rules or match one or more preset route selection descriptors RSDs. The processor is configured to perform URSP matching according to the one or more URSP rules.

In a possible design, that the processor is configured to perform URSP matching according to the one or more URSP rules includes:
stopping URSP matching if none of one or more pieces of single network slice selection assistance information S-NSSAI corresponding to a URSP rule that is in the one or more preset URSP rules and that matches a current to-be-initiated service is supported by a first network; or
stopping URSP matching if none of one or more pieces of S-NSSAI corresponding to an RSD that matches a current to-be-initiated service and that is in the one or more preset RSDs is supported by a first network.

In a possible design, the processor is further configured to access a second network by using a mobility change procedure, and request at least one of the one or more pieces of S-NSSAI in the second network.

The second network is a network that supports the at least one of the one or more pieces of S-NSSAI.

In a possible design, the processor is further configured to obtain network selection assistance information, where the network selection assistance information includes one or more pieces of the following information:
information about one or more networks that support one or more slices in a target slice set, one or more priorities of the one or more networks, and network slice information respectively supported by the one or more networks.

The target slice set is one or more slices corresponding to target NSSAI, and the target NSSAI includes one or more of the following: NSSAI corresponding to a network slice requested by a terminal apparatus, NSSAI corresponding to a network slice that rejects access of the terminal apparatus, and NSSAI corresponding to a network slice that allows access of the terminal apparatus.

In a possible design, that the processor is configured to access a second network by using a mobility change procedure includes: performing the mobility change procedure based on the network selection assistance information, to access the second network.

According to a fourth aspect, an embodiment of this application provides a slice access apparatus. The apparatus is the foregoing network apparatus. The apparatus includes a communication interface, and a processor. The processor is configured to determine indication information, where the indication information indicates to match one or more preset URSP rules or match one or more preset route selection descriptors RSDs. The communication interface is configured to send the indication information to a terminal apparatus.

In a possible design, that the processor is configured to determine indication information includes: determining the indication information based on one or more pieces of the following information: user subscription information, a location of the terminal apparatus, and pre-configuration information.

In a possible design, that the communication interface is configured to send the indication information to a terminal apparatus includes: sending one or more URSP rules to the terminal apparatus, where at least one of the one or more URSP rules includes the indication information.

In a possible design, the processor is further configured to:
obtain target NSSAI; determine network selection assistance information based on the target NSSAI; and send the network selection assistance information to the terminal apparatus.

The network selection assistance information includes one or more pieces of the following information: information about one or more networks that support one or more slices in a target slice set, one or more priorities of the one or more networks, and network slice information respectively supported by the one or more networks.

The target slice set is one or more slices corresponding to target NSSAI, and the target NSSAI includes one or more of the following: NSSAI corresponding to a network slice requested by a terminal apparatus, NSSAI corresponding to a network slice that rejects access of the terminal apparatus, and NSSAI corresponding to a network slice that allows access of the terminal apparatus.

In any possible design of any one of the foregoing aspects, the preset URSP rule includes a non-wildcard URSP rule; or the preset URSP rule includes a first URSP rule and one or more second URSP rules; or the preset URSP rule includes the first URSP rule.

The first URSP rule is a URSP rule in which the indication information is located, and the second URSP rule is a URSP rule whose priority is higher than that of the first URSP rule.

The preset RSD includes a first RSD and one or more second RSDs; or the preset RSD includes the first RSD.

The first RSD is an RSD in which the indication information is located, and the second RSD is an RSD whose priority is higher than that of the first RSD.

According to a fifth aspect, this application provides a slice access apparatus, configured to implement a function of the terminal apparatus in any one of the foregoing aspects, or configured to implement a function of the network apparatus in any one of the foregoing aspects.

According to a sixth aspect, this application provides a slice access apparatus. The apparatus has a function of implementing the slice access method according to any one of the foregoing aspects. The function may be implemented by hardware, or may be implemented by hardware executing corresponding software. The hardware or the software includes one or more modules corresponding to the function.

According to a seventh aspect, a slice access apparatus is provided. The slice access apparatus includes a processor and a memory. The memory is configured to store computer-executable instructions. When the slice access apparatus runs, the processor executes the computer-executable instructions stored in the memory, to enable the slice access apparatus to perform the slice access method according to any one of the foregoing aspects.

According to an eighth aspect, a slice access apparatus is provided. The slice access apparatus includes a processor. The processor is configured to: be coupled to a memory; and after reading instructions in the memory, perform the slice access method according to any one of the foregoing aspects according to the instructions.

According to a ninth aspect, an embodiment of this application provides a slice access apparatus. The apparatus may be a chip system. The chip system includes a processor, may further include a memory, and is configured to implement a function of the method described in any one of the foregoing aspects. The chip system may include a chip, or may include a chip and another discrete component.

According to a tenth aspect, a slice access apparatus is provided. The apparatus may be a circuit system, the circuit system includes a processing circuit, and the processing circuit is configured to perform the slice access method in any one of the foregoing aspects.

According to an eleventh aspect, an embodiment of this application further provides a computer-readable storage medium. The computer-readable storage medium includes instructions, and when the instructions are run on a computer, the computer is enabled to perform the method in any one of the foregoing aspects.

According to a twelfth aspect, an embodiment of this application further provides a computer program product. The computer program product includes instructions; and when the computer program product runs on a computer, the computer is enabled to perform the method in any one of the foregoing aspects.

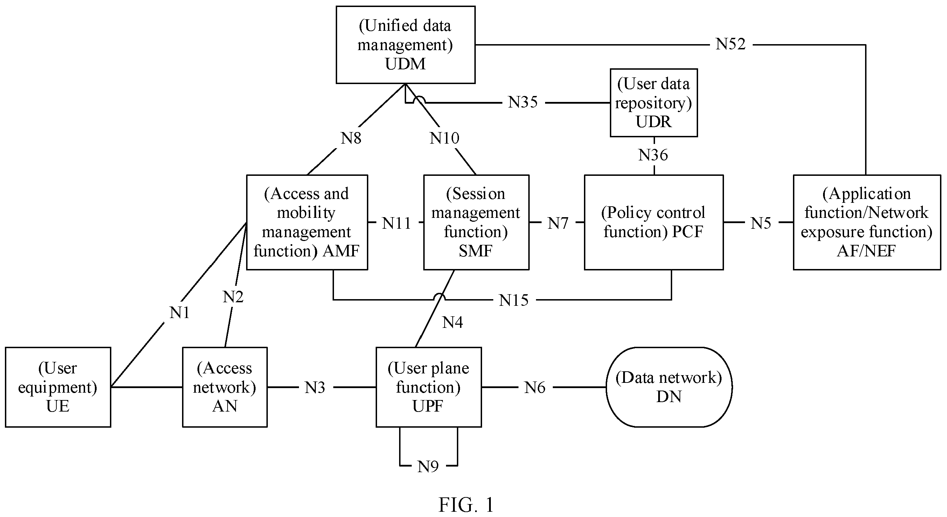

According to a thirteenth aspect, an embodiment of this application provides a system. The system includes a terminal apparatus for performing the slice access method according to any one of the first aspect or the designs of the first aspect and a network apparatus for performing the slice access method according to any one of the second aspect or the designs of the second aspect. Optionally, the system further includes a mobility management network element (which, for example, may be an AMF shown in FIG. 1). The mobility management network element is configured to: send a message from a terminal to a policy network element (that is, the network apparatus in the fourth aspect), or send a message from a policy network element to a terminal. For example, the mobility management network element is configured to transparently transmit a message between the terminal and the policy network element.

### BRIEF DESCRIPTION OF DRAWINGS

FIG. 1 is a schematic diagram of an architecture of a communication system according to an embodiment of this application;
FIG. 2(a) and FIG. 2(b) each are a schematic diagram of an architecture of a communication system according to an embodiment of this application;
FIG. 3 is a schematic diagram of an architecture of a slice access system according to an embodiment of this application;
FIG. 4(a), FIG. 4(b), FIG. 4(c), FIG. 4(d), FIG. 4(e), FIG. 4(f) each are a schematic principle diagram of a URSP matching procedure according to an embodiment of this application;
FIG. 5 to FIG. 7 each are a schematic flowchart of a slice access method according to an embodiment of this application; and
FIG. 8 and FIG. 9 each are a schematic diagram of a structure of a slice access apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects.

"At least one" means one or more.

"A plurality of" means two or more than two.

The term "and/or" describes an association relationship between associated objects and may indicate three relationships. For example, A and/or B may indicate the following cases: Only A exists, both A and B exist, and only B exists, where A and B may be singular or plural.

The character "/" generally indicates an "or" relationship between associated objects. For example, A/B may represent A or B.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the specification and the accompanying drawings of this application, "of (English: of)", "relevant (English: corresponding, relevant)", and "corresponding (English: corresponding)" may sometimes be interchangeably used. It should be noted that consistent meanings are expressed when differences are not emphasized.

First, technical terms designed in embodiments of this application are described.
1. Types and characteristic attributes of network slices: As described above, a physical network may be abstracted into a plurality of network slices, and each network slice may constitute an end-to-end logical network. Network slices are logically isolated from each other and do not affect each other. Generally, to meet different communication requirements, network slices are classified into a plurality of types: for example, but not limited to, an enhanced mobile broadband (enhanced mobile broadband, eMBB) type, a massive machine type connection (massive machine type connection, mMTC) type, and an ultra reliability and low latency connection (ultra reliability and low latency connection, uRLLC) type. Different types of network slices have different network characteristics. For example, an eMBB network slice is required to have a characteristic of supporting a high-bandwidth and low-latency service. An mMTC network slice is required to have a characteristic of supporting a massive-access and low-bandwidth service. A uRLLC network slice is required to have a characteristic of high reliability and a low latency. It can be learned that an application service type, an end-to-end latency, a maximum rate of a single terminal, and the like that are supported are all characteristic attributes of a network slice. These characteristic attributes depend on a design of the slice.
2. Single network slice selection assistance information (Single network slice selection assistance information, S-NSSAI) is used to uniquely identify one network slice.
3. Network slice selection assistance information (network slice selection assistance information, NSSAI)
   The NSSAI is a set of one or more S-NSSAI. Correspondingly, the NSSAI may be used to represent one or more network slices.
4. A PDU session (Session) is a session service that implements PDU connectivity between UE and a data network (data network, DN), and is identified by a PDU session ID.
5. URSP: Usually, when creating a required network slice for a customer on a physical infrastructure of a communication network based on a customer order, an operator often signs a service level agreement (service level agreement, SLA) of the network slice with the customer based on a service requirement. In a PLMN of the operator, an entire network does not necessarily support a same network slice set (network slice set). The operator may obtain different slice sets through division based on areas or even a single base station. In this way, different area networks may correspond to different slices. Therefore, in a non-roaming scenario, a user may access a required slice by using only some areas in a home network, or in a roaming scenario, a user may access a required slice by using only some areas in some visited networks.

Currently, the URSP is defined in the standard for a routing problem of users. The URSP is mainly used to determine PDU session parameters required by different applications (applications, APPs) or services, such as a network slice, a data network name (DNN), and a session service continuity mode (session service continuity mode, SSC mode). By using the URSP, a terminal may determine a corresponding PDU session parameter based on a network requirement of an APP or a service, and establish a PDU session based on the parameter. Then, data of the APP or the service is transmitted by using the established session.

A structure of the URSP is shown in the following Table 1.

**Table 1**

| Information name | Description | Category | PCF permitted to modify in a UE context | Scope |
|---|---|---|---|---|
| Rule Precedence | Determines the order the URSP rule is enforced in the UE. | Mandatory (NOTE 1) | Yes | UE context |
| **Traffic descriptor** | This part defines the Traffic descriptor components for the URSP rule. | Mandatory (NOTE 3) | | |
| Application descriptors | It consists of OSId and OSAppId(s). (NOTE 2) | Optional | Yes | UE context |
| IP descriptors (NOTE 5) | Destination IP 3 tuple(s) (IP address or IPv6 network prefix, port number, protocol ID of the protocol above IP). | Optional | Yes | UE context |
| Domain descriptors | Destination FQDN(s) | Optional | Yes | UE context |
| Non-IP descriptors (NOTE 5) | Descriptor(s) for destination information of non-IP traffic | Optional | Yes | UE context |
| DNN | This is matched against the DNN information provided by the application. | Optional | Yes | UE context |
| Connection Capabilities | This is matched against the information provided by a UE application when it requests a network connection with certain capabilities. (NOTE 4) | Optional | Yes | UE context |
| **List of Route Selection Descriptors** | A list of Route Selection Descriptors. The components of a Route Selection Descriptor are described in table 6.6.2.1-3. | Mandatory | | |

The URSP mainly includes a traffic descriptor (Traffic descriptor) and one or more route selection descriptors (Route Selection Descriptors, RSDs) (shown in bold) in Table 1. The traffic descriptor is used to match service information (an application identifier, a flow identifier, a service identifier, or the like). For example, a terminal modem (modem) matches an application identifier (APP ID) provided by an application layer with a traffic descriptor in each URSP rule in descending order of one or more priorities of the one or more URSP rules. There are a plurality of types of traffic descriptors, for example, application descriptors (for example, an operating system identifier (OSId) + an application identifier (OSAppId), where for example, WeChat in an Android operating system may be represented as android+com.wechat) and IP descriptors (for example, a destination IP address corresponding to an initiated service) in Table 1.

A structure of the RSD is shown in the following Table 2.

**Table 2**

| Information name | Description | Category | PCF permitted to modify in URSP | Scope |
|---|---|---|---|---|
| Route Selection Descriptor Precedence | Determines the order in which the Route Selection Descriptors are to be applied. | Mandatory (NOTE 1) | Yes | UE context |
| **Route selection components** | This part defines the route selection components | Mandatory (NOTE 2) | | |
| SSC Mode Selection | One single value of SSC mode. (NOTE 5) | Optional | Yes | UE context |
| Network Slice Selection | Either a single value or a list of values of S-NSSAI(s). | Optional (NOTE 3) | Yes | UE context |
| DNN Selection | Either a single value or a list of values of DNN(s). | Optional | Yes | UE context |
| PDU Session Type Selection | One single value of PDU Session Type | Optional | Yes | UE context |
| Non-Seamless Offload indication | Indicates if the traffic of the matching application is to be offloaded to non-3GPP access outside of a PDU Session. | Optional | Yes | UE context |
| Access Type preference | Indicates the preferred Access Type (3GPP or non-3GPP or Multi-Access) when the UE establishes a PDU Session for the matching application. | Optional | Yes | UE context |

The RSD includes information such as a DNN, S-NSSAI, and an SSC mode.

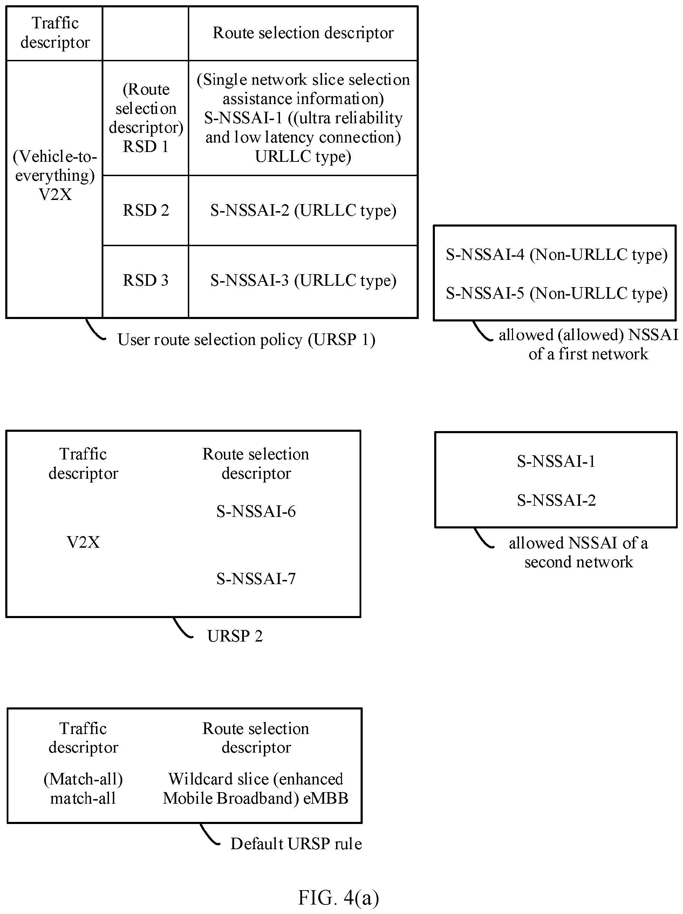

For example, as shown in FIG. 4(a), URSP 1 includes a traffic descriptor and three RSDs. The traffic descriptor distinguishes between different services by using an application identifier or another type identifier. RSD 1 includes S-NSSAI-1, RSD 2 includes S-NSSAI-2, and RSD 3 includes S-NSSAI-3.

6. URSP matching: When UE determines to initiate a specific service/application, the UE first matches a to-be-initiated service/application with the traffic descriptor in the URSP rule based on a priority of the URSP rule.

If a specific URSP rule is matched (the URSP rule may alternatively be a default URSP rule (which may also be referred to as a wildcard URSP rule), for example, the traffic descriptor is in a match-all form), the UE further needs to determine, based on a current RSD of the URSP rule, slice S-NSSAI that needs to be used for the service, and determine whether the slice S-NSSAI belongs to allowed NSSAI of a current network. Specifically, in a roaming scenario, a terminal needs to determine whether the slice S-NSSAI belongs to current allowed NSSAI of a visited network. In a non-roaming scenario, a terminal needs to determine whether the slice S-NSSAI is in current allowed NSSAI of a home network. If the S-NSSAI is not in the allowed NSSAI, the UE continues to match a subsequent URSP rule or RSD based on a URSP/RSD priority until it is determined that the slice S-NSSAI allowed to be used by the service appears in the allowed NSSAI and is accepted by a network side. For example, when determining that a URSP rule corresponding to an application ID that initiates the service is unavailable, the UE may continue to match a URSP rule with a lowest priority based on the priority, that is, the traffic descriptor is a URSP rule in a match-all form shown in FIG. 4(a). A URSP rule finally matched by the UE is referred to as a target URSP rule. An RSD finally matched by the UE is referred to as a target RSD.

Next, the UE determines whether there is an existing PDU session that meets a definition of the target RSD.

If information such as a DNN, S-NSSAI, and an SSC mode corresponding to the existing PDU session is consistent with information included in the target RSD, it indicates that the existing PDU session is consistent with a current service requirement. In this case, the UE may choose to initiate a PDU session modification request (PDU Session Modification Request) based on the existing PDU session, to establish a new quality of service flow (quality of service, QoS flow) on the existing PDU session, and use the newly established QoS flow to carry the service.

The PDU session modification request message may be carried by using an N1 SM Container. The PDU session modification request includes (or carries) a PDU session ID, packet filters (packet filters), a requested QoS parameter (requested QoS), and the like. The PDU session ID is used by an AMF to associate with a specific session context, and the N1 SM Container of the terminal is transparently transmitted by the AMF to an SMF.

If none of the existing PDU session(s) matches RSD information in the URSP, the UE initiates a PDU session establishment request for the service/application. The session establishment request message carries a newly allocated PDU session ID and parameters such as a DNN, S-NSSAI, and an N1 SM Container (an SSC mode, and a PDU Session Type) in the RSD. The newly allocated PDU session ID is used to identify a PDU session corresponding to the PDU session establishment request, DNN+S-NSSAI is used as a parameter for the AMF to select an SMF entity for the PDU session establishment request, and the N1 SM Container is transparently transmitted by the AMF to the selected SMF.

For example, UE needs to access a V2X service. According to the URSP rule provided by the home network, the V2X service needs to access a URLLC-type slice. As shown in FIG. 4(a), a URSP 1 rule provided by the home network for the terminal includes three RSDs, which are respectively three pieces of slice information corresponding to the V2X, and the three slices are all URLLC-type slices. In a possible deployment scenario, the URLLC-type slice may not be deployed in a visited network currently accessed by the UE. In other words, allowed NSSAI received by the UE does not include a URLLC slice that the UE needs to access. As shown in FIG. 4(a), slices corresponding to S-NSSAI-4 and S-NSSAI-5 supported by a first network are not URLLC-type slices. FIG. 4(a) is used as an example. When determining that a V2X service needs to be initiated, the UE first matches a traffic descriptor, and the UE uses to-be-initiated service information, for example, a V2X service identifier, to match a traffic descriptor in one or more locally stored URSP rules, to determine that the traffic descriptor in the URSP 1 is consistent with the to-be-initiated service. In this case, the UE continues to match an RSD in the URSP 1. The UE first matches the S-NSSAI-1 according to the priority sequence and finds that the S-NSSAI-1 does not belong to the allowed NSSAI. In this case, according to a current technology, the UE continues to match subsequent S-NSSAI-2, and finds that the S-NSSAI-2 does not belong to the allowed NSSAI either. The rest can be deduced by analogy, until all RSDs in the URSP 1 are matched. The UE finds that none of the S-NSSAI indicated by the URSP 1 is supported by a current network, in other words, none of the S-NSSAI is in the allowed NSSAI of the current network. In this case, the UE continues to match subsequent URSP rules based on priorities of the URSP rules until a default URSP rule (which may also be referred to as a wildcard URSP rule) with a lowest priority is matched. As shown in FIG. 4(a), slice information included in the default URSP rule is eMBB-type slice information. In this case, the UE establishes a PDU session based on the eMBB-type slice information. Consequently, the established PDU session probably cannot meet a V2X service requirement.

To resolve the foregoing technical problem, embodiments of this application provide a slice access method. The following describes in detail the slice access method in embodiments of this application.

The slice access method provided in embodiments of this application is applied to a communication system that uses a network slice for communication, for example, a 5G system, a subsequent evolved system, or another system. FIG. 1 is an example architecture of a communication system to which embodiments of this application are applicable. The communication system includes a network exposure function (network exposure function, NEF), a policy control function (policy control function, PCF), an application function (application function, AF), a unified data management (unified data management, UDM), a user data repository (user data repository, UDR), an access and mobility management function (access and mobility management function, AMF), a session management function (session management function, SMF), and an access network (access network, AN) element. The AN includes a wired access network and a radio access network (radio access network, RAN), network elements or devices such as a user plane function (user plane function, UPF) and a DN network element, and a terminal UE.

The terminal accesses the AN in a wireless or wired manner. The wireless manner may be, for example, accessing the AN by using wireless fidelity (wireless fidelity, Wi-Fi), or may be accessing the AN by using a cellular network (for example, E-UTRA or NR). The terminal communicates with the AMF through N1. The AN communicates with the UPF through N3, and the AN communicates with the AMF through N2. The UPF communicates with the SMF through N4, and the UPF communicates with the DN network element through N6. The AMF communicates with the UDM through N8. The SMF communicates with the AMF through N11, the SMF communicates with the UDM through N10, and the SMF communicates with the PCF through N7. The AMF communicates with an AUSF through N12 (not shown in FIG. 1), and the AUSF communicates with the UDM through N13 (not shown in FIG. 1). The AF communicates with the PCF through N5. The UDM communicates with the UDR through N35. The UDM communicates with the AF/NEF through N52. The UDR communicates with the PCF through N36. The AMF communicates with the PCF through N15.

In the system shown in FIG. 1, the AF/NEF means that the AF interacts with a core network element via the NEF.

In the system shown in FIG. 1, functions of some network elements are as follows.

The AF mainly transfers a requirement of an application side for a network side, for example, a QoS requirement or user equipment status event subscription. The AF may be a third-party function entity or an application service deployed by an operator, for example, an IMS voice call service. When interacting with a core network, an application function entity of a third-party application may further perform authorization processing via the NEF. For example, a third-party AF sends a request message to the NEF, and the NEF determines whether the AF is allowed to send the request message. If verification succeeds, the NEF forwards the request message to a corresponding PCF or UDM.

The UDM is mainly responsible for functions such as managing subscription data and user access authorization.

The UDR is mainly responsible for storage and retrieval of subscription data, policy data, application data, and other types of data.

In addition, the UDR can add corresponding S-NSSAI to subscribed NSSAI of a subscriber and add subscribed values such as a bandwidth and QoS guarantee that can be used by the subscriber under the S-NSSAI.

The PCF is mainly responsible for performing policy control functions such as charging for a session level or a service flow level, quality of service (quality of service, QoS) bandwidth guarantee, mobility management, and UE policy decision. In this architecture, PCFs connected to the AMF and the SMF respectively correspond to an AM PCF (that is, a PCF for access and mobility control) and an SM PCF (that is, a PCF for session management). In an actual deployment scenario, the AM PCF and the SM PCF may not be a same PCF entity.

The SMF mainly performs functions such as session management, execution of a control policy delivered by the PCF, UPF selection, and UE internet protocol (internet protocol, IP) address allocation.

The AMF mainly performs functions such as mobility management, and access authentication/authorization. In addition, the AMF network element is further responsible for transferring a user policy between UE and a PCF.

The UPF serves as an interface UPF with a data network, and implements functions such as user plane data forwarding, charging statistics based on a session/a flow level, and bandwidth throttling.

The AN corresponds to different access networks, where for example, there are a plurality of manners such as wired access and wireless base station access.

In the architecture shown in FIG. 1, functions of some interfaces are as follows.
1. N7 represents an interface between the PCF and SMF, and is configured to deliver a PDU session granularity and a service data flow granularity control policy.
2. N15 represents an interface between the PCF and the AMF, and is configured to deliver a UE policy and an access control related policy.
3. N5 represents an interface between the AF and the PCF, and is configured to: deliver an application service request and report a network event.
4. N4 represents an interface between the SMF and the UPF, and is configured to transfer information between a control plane and a user plane, including delivery of a forwarding rule, a QoS control rule, a traffic statistics rule, and the like from the control plane to the user plane, and reporting of user plane information.
5. N11 represents an interface between the SMF and the AMF, and is configured to: transfer PDU session tunnel information between the AN and the UPF, transfer a control message to be sent to the UE, transfer radio resource control information to be sent to the AN, and the like.
6. N2 represents an interface between the AMF and the RAN, and is configured to transfer radio bearer control information and the like from a core network side to the AN.
7. N1 represents an interface between the AMF and the UE, is access-irrelevant, and is configured to transfer the QoS control rule and the like to the UE.
8. N8 represents an interface between the AMF and the UDM, and is used by the AMF to obtain, from the UDM, subscription data and authentication data that are related to access and mobility management, and used by the AMF to register current mobility management-related information of the UE with the UDM.
9. N9 is used to forward user-plane data between UPFs.
10. N10 represents an interface between the SMF and the UDM, and is used by the SMF to obtain, from the UDM, subscription data related to session management, and used by the SMF to register current session-related information of the UE with the UDM.
11. N35 represents an interface between the UDM and the UDR, and is used by the UDM to obtain user subscription data information from the UDR.
12. N36 represents an interface between the PCF and the UDR, and is used by the PCF to obtain policy-related subscription data and application data-related information from the UDR.

Optionally, the terminal in embodiments of this application may include various handheld devices, wearable devices, or computing devices that have a communication function, or another processing device connected to a modem, and may further include a personal digital assistant (personal digital assistant, PDA) computer, a tablet computer, a laptop computer (laptop computer), a machine type communication (machine type communication, MTC) terminal, user equipment (user equipment, UE), and the like. Certainly, when the terminal is mentioned, the terminal may alternatively be, for example, a chip system in UE. An implementation form of the terminal is not limited in embodiments of this application.

It may be understood that based on a requirement for deploying a 5G system, the foregoing network elements may communicate with each other in a specific manner (for example, the terminal communicates with the AMF through N1). Only communication modes between some network elements are listed above. For brevity, a communication mode between other network elements is not described in detail in embodiments of this application.

Optionally, names of network elements in FIG. 1 and names of interfaces between the network elements are merely examples. In specific implementation, the names of the network elements or the names of the interfaces between the network elements may be other names, or the network elements may be referred to as entities. This is not specifically limited in embodiments of this application. All or a part of the network elements in FIG. 1 may be physical entity network elements, or may be virtualized network elements. This is not limited herein.

Optionally, the architecture may further include another network element, for example, an operation administration management (operation administration management, OAM) network element, a network slice selection function (network slice selection function, NSSF) network element, a network repository function (network repository function, NRF) network element, or an authentication server function (authentication server function, AUSF) network element. This is not limited in this embodiment of this application.

Further, the 5G communication system shown in FIG. 1 includes a system in a non-roaming scenario and a system in a roaming scenario. Optionally, the system in each scenario may be a system that is based on a service-oriented interface, or may be a system that is based on a reference point. Herein, for specific descriptions of "based on a service-oriented interface" and "based on a reference point", refer to a conventional technology. Details are not described herein.

This embodiment of this application mainly describes a roaming architecture. The technical solutions of this application are also applicable to a non-roaming architecture. For the non-roaming architecture, refer to the conventional technology. Details are not described herein again. Specifically, in the 3GPP standard, two roaming manners for a user to perform access in a visited location are defined, that is, home-routed roaming (home-routed roaming) and local breakout roaming (local breakout roaming).

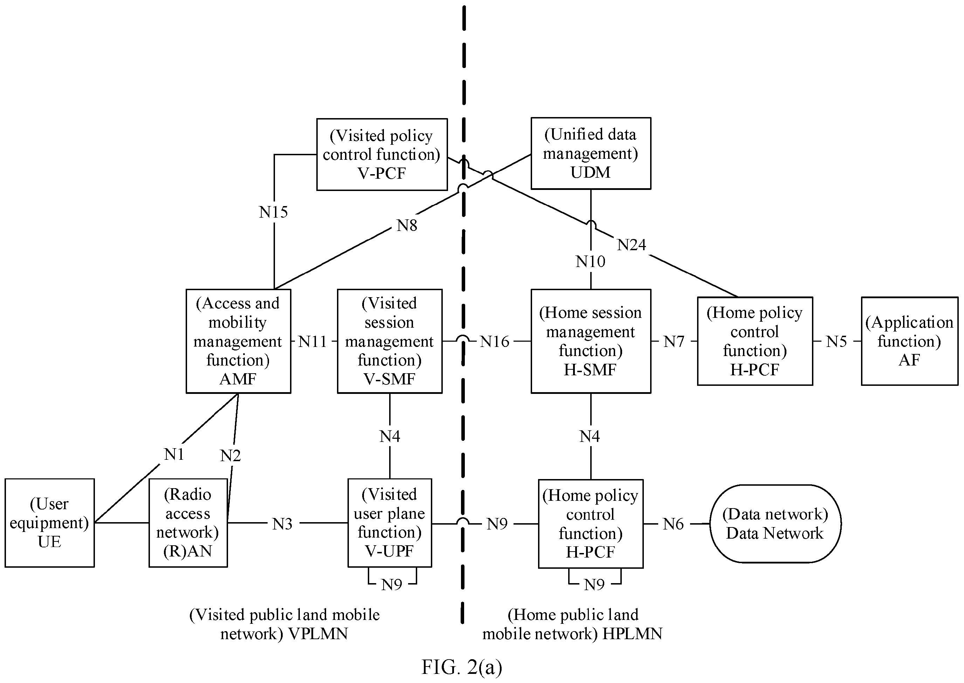

In a roaming architecture, for information such as functions of some network elements and an interface between network elements, refer to related descriptions of the architecture shown in FIG. 1. Details are not described herein again. In the roaming architecture, some network elements are divided into two parts. One part is located in a home public land mobile network (home public land mobile network, HPLMN), and the other part is located in a visited public land mobile network (visited public land mobile network, VPLMN). When the terminal is in a roaming scenario, corresponding network services may be obtained by using network elements respectively deployed in a visited location and a home location. For example, in FIG. 2(a), a PCF is divided into a V-PCF (that is, a PCF in the visited location) and an H-PCF (that is, a PCF in the home location). Similarly, an SMF is divided into a V-SMF and an H-SMF.

FIG. 2(a) shows a roaming architecture of home-routed roaming. In the roaming architecture shown in FIG. 2(a), the AMF and the H-SMF are respectively located in the visited location and the home location, and a session management function is performed by the home H-SMF that supports interaction with a UDM/H-PCF. In addition, an H-PCF connected to the V-PCF and an H-PCF connected to the H-SMF may not be a same PCF entity in an actual scenario.

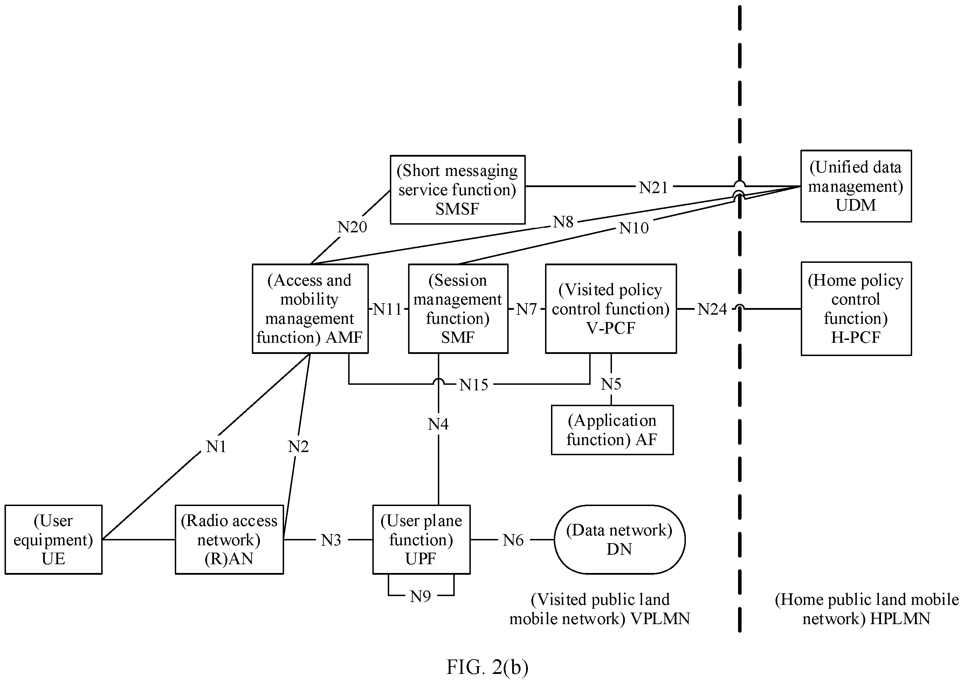

FIG. 2(b) is a roaming architecture of local breakout roaming. In the roaming architecture, both an AMF and an SMF are located in a visited location. A session management function is performed by the SMF in the visited location. In addition, a V-PCF connected to the AMF and a V-PCF connected to the SMF may not be a same PCF entity in an actual scenario. FIG. 2(b) includes a short messaging service function (short messaging service function, SMSF). The SMSF communicates with a UDM through N21 and communicates with the AMF through N20.

In embodiments of this application, that a network element (for example, a network element A) obtains information from another network element (for example, a network element B) may mean that the network element A directly receives the information from the network element B, or may mean that the network element A receives the information from the network element B via another network element (for example, a network element C). When the network element A receives the information from the network element B via the network element C, the network element C may transparently transmit the information, or may process the information, for example, add the information to different messages for transmission, or screen the information, and send only information obtained through screening to the network element A. Similarly, in various embodiments of this application, that the network element A sends information to the network element B may mean that the network element A directly sends the information to the network element B, or may mean that the network element A sends the information to the network element B via another network element (for example, the network element C).

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

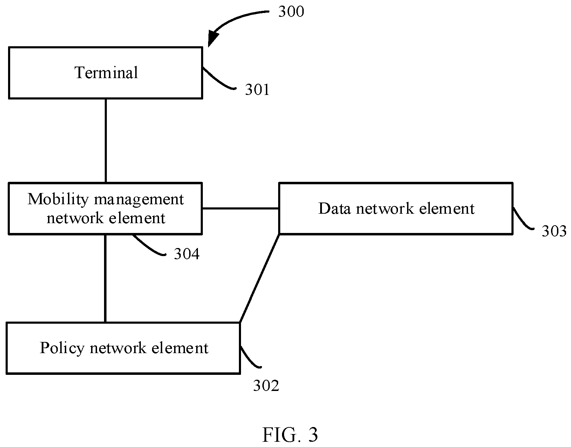

An embodiment of this application provides a slice access system. Refer to FIG. 3. The system 300 includes a terminal 301 and a policy network element 302.

The policy network element 302 is configured to send a URSP to a terminal. The URSP is different from a URSP in a conventional technology. Specifically, the URSP includes indication information, and the indication information indicates to match one or more preset URSP rules or to match one or more preset RSDs. For details of the preset URSP rule and the preset RSD, refer to the following embodiments.

The terminal 301 is configured to perform URSP matching according to the URSP from the policy network element 302. URSP matching is stopped when none of one or more pieces of single network slice selection assistance information S-NSSAI corresponding to the one or more preset URSPs is supported by a first network, or none of one or more pieces of S-NSSAI corresponding to the one or more preset RSDs is supported by a first network. In this way, a probability that a terminal service fails because a slice that is not suitable for a service is subsequently matched can be reduced.

In a possible implementation, the slice access system further includes a mobility management network element 304 and a data network element 303.

The mobility management network element 304 is configured to: send a message from the terminal 301 to the policy network element 302, or send a message from the policy network element 302 to the terminal 301. For example, the mobility management network element 304 is configured to transparently transmit a message between the terminal 301 and the policy network element 302.

The data network element 303 is configured to store some data. The data may be used by a policy network element to formulate a URSP, or used by another network element to learn of user-related information.

The data network element in FIG. 3 may be the UDM in FIG. 1 or FIG. 2(a) and FIG. 2(b) or another network element having a similar function, or may be a UDR or another network element having a similar function. The mobility management network element may be the AMF in FIG. 1 or FIG. 2(a) and FIG. 2(b) or another network element having a similar function. The policy network element may be the PCF in FIG. 1 or the H-PCF in FIG. 2(a) and FIG. 2(b) or another network element having a similar function. In addition, for a connection relationship between network elements shown in FIG. 3, refer to a connection relationship between corresponding network elements in FIG. 1 or FIG. 2(a) and FIG. 2(b). Details are not described herein again.

The technical solutions in embodiments of this application may be applied to the roaming scenario or the non-roaming scenario shown in FIG. 2(a) and FIG. 2(b) (refer to the conventional technology).

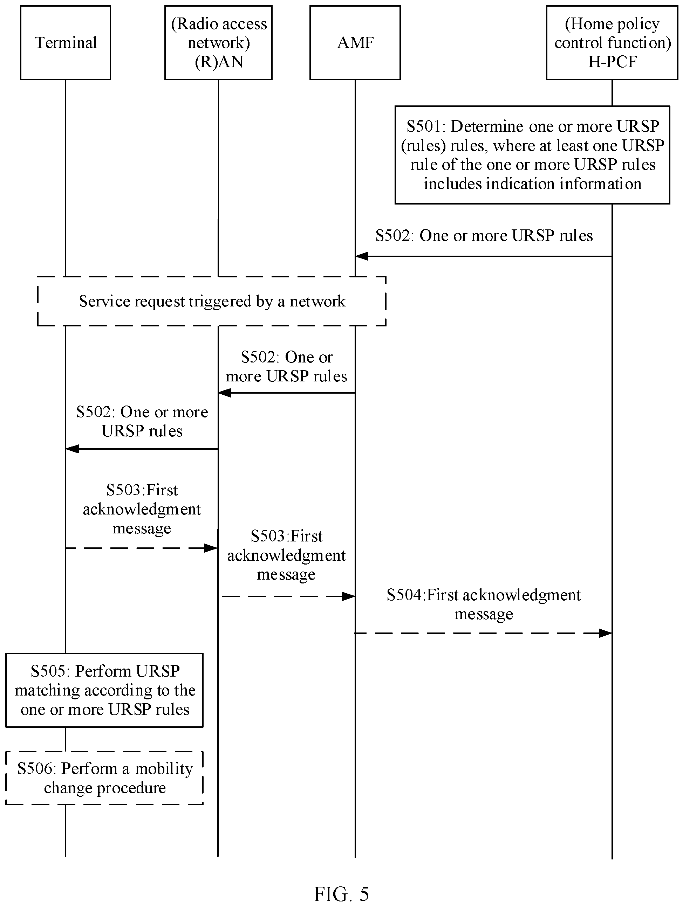

For example, a network apparatus is the PCF shown in FIG. 1 or the H-PCF shown in FIG. 2(a) and FIG. 2(b). Refer to FIG. 5. A slice access method provided in embodiments of this application includes the following steps.

S501: The H-PCF determines one or more URSP rules, where at least one URSP rule of the one or more URSP rules includes indication information.

The indication information indicates to match one or more preset URSP rules or to match one or more preset route selection descriptors RSDs.

Optionally, the indication information may be used as an RSD granularity and located in the RSD, that is, included in the foregoing Table 2.

Optionally, the indication information may alternatively be used as a URSP granularity and located in the URSP rule, that is, included in the foregoing Table 1.

That the indication information indicates to match one or more preset URSP rules means that only one or more preset URSP rules are matched, and a URSP rule other than the preset URSP rule is not matched. Similarly, that the indication information indicates to match one or more preset RSDs means that only one or more preset RSDs are matched, and an RSD other than the preset RSD is not matched.

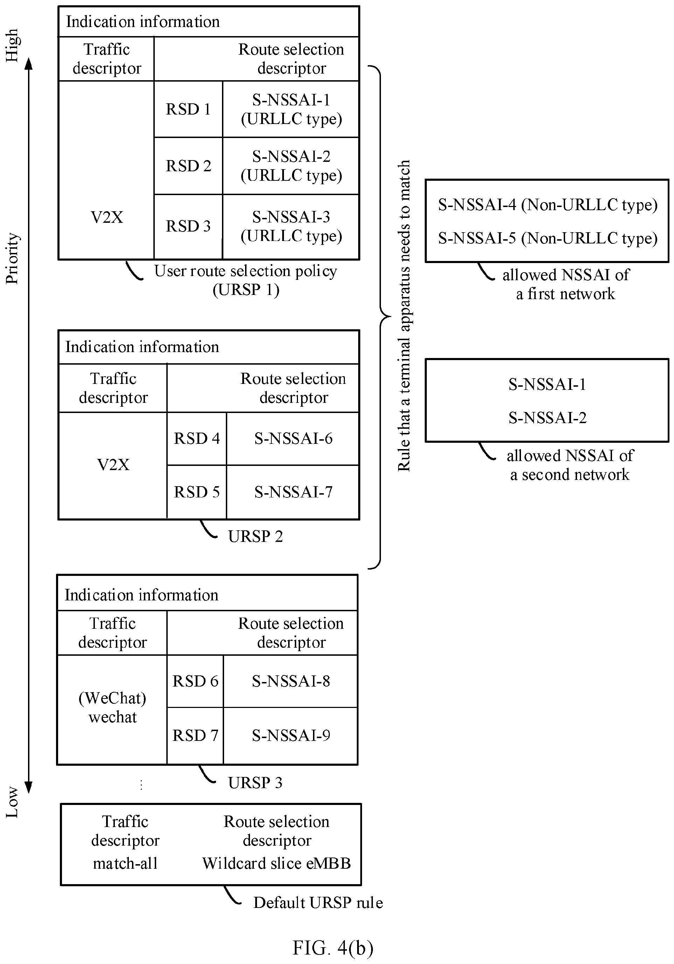

In this embodiment of this application, in a possible implementation, the H-PCF encapsulates, into the indication information, URSP rules that need to be matched. In other words, the URSP rules that need to be matched all include the indication information. In this case, the preset URSP rule may include a URSP rule (referred to as a first URSP rule in this embodiment of this application) in which the indication information is located. For example, refer to FIG. 4(b). The H-PCF makes a decision to obtain URSP 1, URSP 2, URSP 3, and a default URSP rule. If URSP 1, URSP 2, and URSP 3 each include indication information, preset URSP rules are URSP 1, URSP 2, and URSP 3. Subsequently, a terminal apparatus matches only URSP 1, URSP 2, and URSP 3.

It should be noted that, in this embodiment of this application, specific content of the indication information may change. For example, when there are two or more pieces of indication information, indication information included in a last URSP rule that needs to be matched may be different from indication information included in a previous URSP rule (that is, a URSP rule whose priority is higher than that of the last URSP rule). For example, in FIG. 4(b), a last URSP rule that needs to be matched is URSP 3. URSP 1 and URSP 2 include same indication information, and indication information included in URSP 3 may be different from the indication information included in URSP 1. It is assumed that the indication information is 1 bit (0 or 1), URSP 3 includes indication information whose value is 0, URSP 1 includes indication information whose value is 1, and URSP 2 also includes indication information whose value is 1. Certainly, the indication information included in the last URSP rule that needs to be matched may be consistent with indication information included in a previous URSP rule (that is, a URSP rule whose priority is higher than that of the last URSP rule). For example, URSP 3 includes indication information whose value is 1, and both URSP 1 and URSP 2 include indication information whose value is 1.

In a possible implementation, the H-PCF encapsulates, into the indication information, a last URSP rule in URSP rules that need to be matched. In this case, the preset URSP rule may include a first URSP rule (the first URSP rule is a URSP rule in which the indication information is located) and one or more second URSP rules (the second URSP rule is a URSP rule whose priority is higher than that of the first URSP rule).

For example, there are URSP 1 (high priority), URSP 2 (medium priority), and URSP 3 (low priority). In this case, if the first URSP rule is URSP 2, the second URSP rule is URSP 1. If the first URSP rule is URSP 3, a second URSP rule whose priority is higher than that of URSP 3 is URSP 1 and URSP 2.

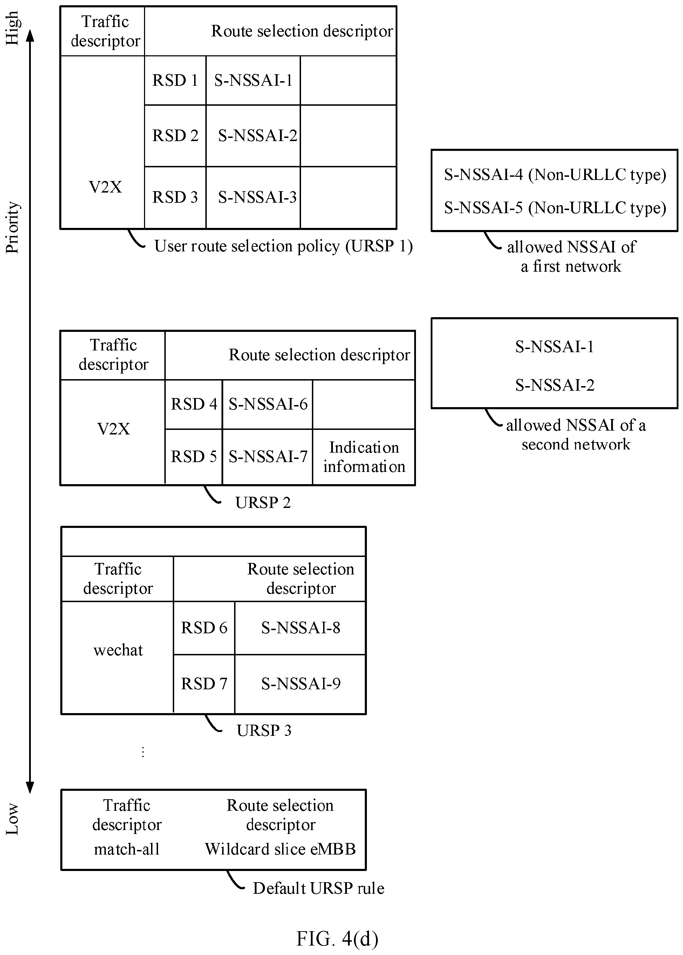

Similarly, the first RSD mentioned in this embodiment of this application is an RSD in which the indication information is located. When a second RSD is mentioned, it usually refers to an RSD whose priority is higher than that of the first RSD. The second RSD, that is, the RSD whose priority is higher than that of the first RSD, includes an RSD whose priority is higher than that of the first RSD in a current URSP rule, and an RSD in another URSP rule whose priority is higher than that of the current URSP rule. For example, refer to FIG. 4(d). A first RSD is RSD 5 in which the indication information is located, and a second RSD is RSD 4 whose priority is higher than RSD 5 in a current URSP rule (that is, URSP 2 in which RSD 5 is located), and RSD 1 to RSD 3 included in URSP 1 whose priority is higher than URSP 2.

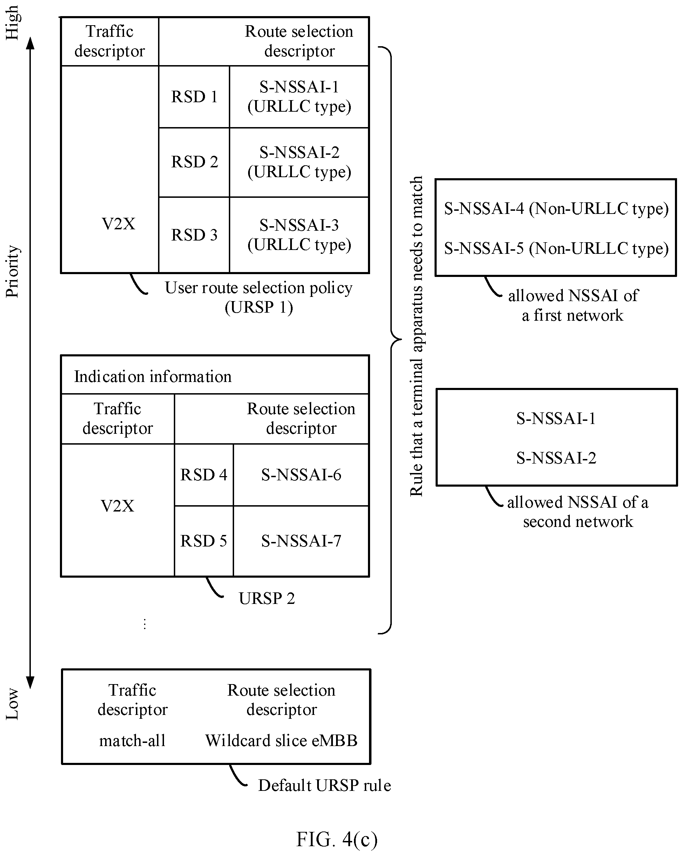

Therefore, in this case, the preset URSP rule may include a first URSP rule (a URSP rule in which the indication information is located) and one or more second URSP rules (a URSP rule whose priority is higher than that of the first URSP rule). For example, refer to FIG. 4(c). The H-PCF makes a decision to obtain URSP 1, URSP 2, and a default URSP rule. If only URSP 2 includes the indication information, the preset URSP rule includes a URSP rule (that is, URSP 2) in which the indication information is located and URSP 1 whose priority is higher than that of URSP 2. Subsequently, a terminal apparatus matches only the preset URSP rule, that is, matches only URSP 1 and URSP 2.

In another possible implementation, the indication information may be located in an RSD. A preset RSD may refer to a first RSD (that is, an RSD in which the indication information is located) and one or more second RSDs (an RSD whose priority is higher than that of the first RSD). For example, refer to FIG. 4(d). The H-PCF makes a decision to obtain URSP 1, URSP 2, URSP 3, and a default URSP rule. If only RSD 5 of URSP 2 includes indication information, the preset RSD includes an RSD (that is, RSD 5) in which the indication information is located and RSD 1 to RSD 4 whose priority is higher than that of RSD 5. Subsequently, a terminal apparatus matches only the preset RSD, that is, matches only RSD 1 to RSD 5.

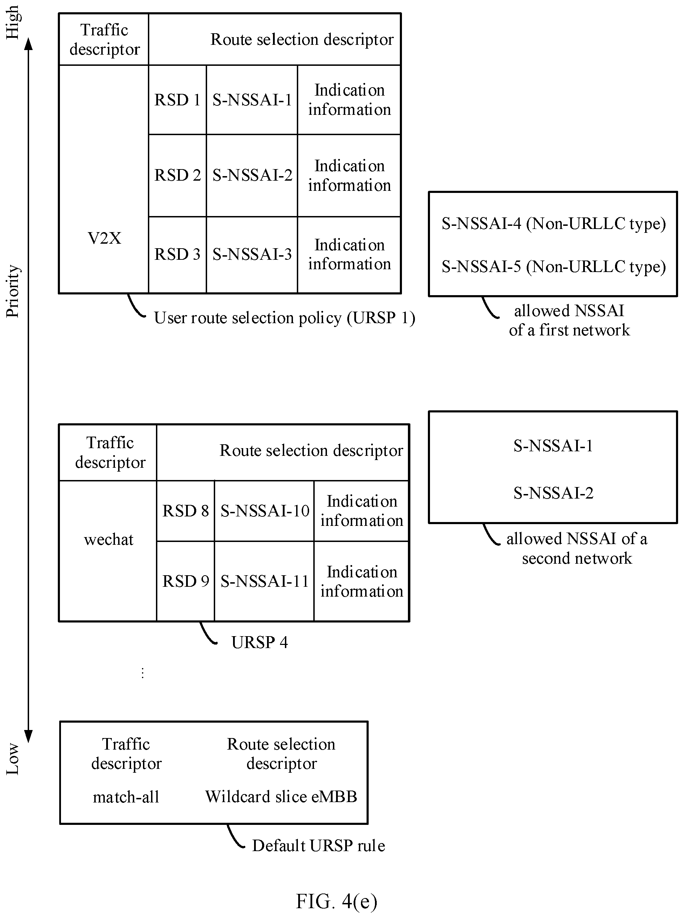

Alternatively, in another possible implementation, the preset URSP rule includes the first RSD, to be specific, includes the RSD in which the indication information is located. For example, refer to FIG. 4(e). The H-PCF makes a decision to obtain URSP 1, URSP 4, and a default URSP rule. If RSD 1, RSD 2, RSD 3, RSD 8, and RSD 9 all include indication information, a preset RSD includes RSD 1, RSD 2, RSD 3, RSD 8, and RSD 9 in which the indication information is located. Subsequently, a terminal apparatus matches only the preset RSD, that is, matches only RSD 1, RSD 2, RSD 3, RSD 8 and RSD 9.

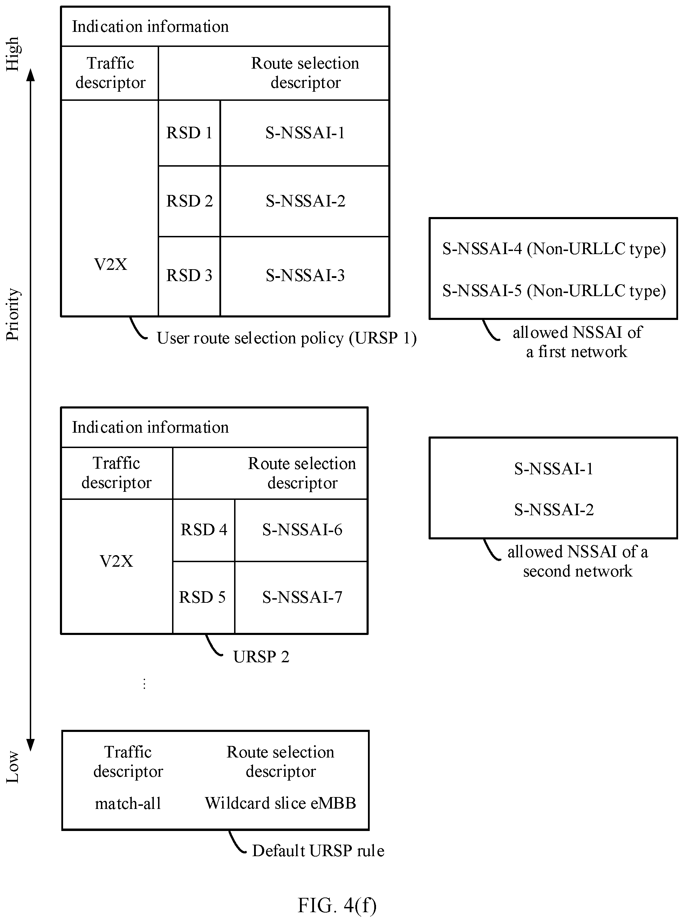

Optionally, in another possible implementation, a preset URSP rule includes a non-wildcard URSP rule, that is, a non-default URSP rule. To be specific, the terminal apparatus matches only the non-default URSP rule, and does not match the default URSP rule. For example, refer to FIG. 4(a). The H-PCF makes a decision to obtain at least three URSP rules, that is, URSP 1, URSP 2, and a default URSP rule. Herein, a preset URSP rule is a non-default URSP 1, URSP 2, and another non-default URSP rule. The terminal apparatus matches only the non-default URSP rule shown in FIG. 4(a) in a URSP matching procedure. Indication information may be encapsulated in a non-default URSP rule that needs to be matched. For example, refer to FIG. 4(f). Alternatively, the indication information may be encapsulated in a default URSP rule that does not need to be matched. Alternatively, the indication information may further be encapsulated in another encapsulation manner.

Specifically, the H-PCF executes a URSP rule decision based on one or more of the following information: user subscription information, a current location of the terminal apparatus, and a local pre-configuration.

S502: The H-PCF sends the one or more URSP rules to the terminal apparatus.

Correspondingly, the terminal apparatus receives the one or more URSP rules from a network apparatus.

Herein, the H-PCF determines, based on a URSP policy section identifier (policy section ID, PSI) reported by the terminal apparatus, whether the URSP rule of the terminal apparatus needs to be updated or added. When determining that the URSP rule of the terminal apparatus needs to be updated or added, the H-PCF sends the one or more URSP rules to the terminal apparatus. At least one URSP rule of the one or more URSP rules includes the indication information.

Specifically, the H-PCF first sends the one or more URSP rules to an AMF, and then the AMF sends the one or more URSP rules to the terminal apparatus via a (R)AN. In a possible implementation, the H-PCF sends the one or more URSP rules to the AMF by invoking a Namf_Communication_N1N2MessageTransfer service provided by the AMF. Optionally, if the AMF determines that UE is currently in an idle (idle) mode, the AMF initiates a network triggered service request procedure (network triggered service request), to trigger the terminal apparatus to restore from the idle mode to a connected (connected) mode. When the terminal apparatus is in the connected mode, the AMF sends the one or more URSP rules to the terminal apparatus in the connected mode via the RAN.

Optionally, the slice access method in this embodiment of this application may further include the following steps.

S503: The terminal apparatus sends a first acknowledgment message to the AMF.

Correspondingly, the AMF receives the first acknowledgment message from the terminal apparatus.

It may be understood that, after receiving the URSP rule from the H-PCF, the terminal apparatus sends the first acknowledgment message to the AMF, where the first acknowledgment message indicates that the terminal apparatus has received the one or more URSP rules.

Specifically, the terminal apparatus sends the first acknowledgment message to the AMF via the (R)AN.

S503 is an optional step.

S504: The AMF sends the first acknowledgment message to the H-PCF.

Correspondingly, the H-PCF receives the first acknowledgment message from the AMF.

In a possible implementation, the AMF returns a Namf_Communication_NIMessageNotify service response and sends the first acknowledgment message to the H-PCF.

S504 is an optional step.

S505: Perform URSP matching according to the one or more URSP rules.

Specifically, it is different from a conventional technology that, in this embodiment of this application, URSP matching is stopped if none of one or more pieces of S-NSSAI corresponding to a URSP rule that matches a current to-be-initiated service and that is in the one or more preset URSP rules is supported by a first network, or none of one or more pieces of S-NSSAI corresponding to an RSD that matches a current to-be-initiated service and that is in the one or more preset RSDs is supported by a first network.

The terminal apparatus performs URSP matching. First, the terminal apparatus needs to match service information, to be specific, the terminal apparatus needs to first determine the URSP rule that matches a current to-be-initiated service or the RSD that matches a current to-be-initiated service. In a possible implementation, when a service is initiated, a terminal modem respectively matches, in descending order of one or more priorities of the one or more URSP rules, an application identifier (APP ID) that is provided by an application layer and that is used to initiate the service with a traffic descriptor in each URSP rule. The matched URSP rule is referred to as the URSP rule that matches the current to-be-initiated service. The RSD included in the URSP rule that matches the current to-be-initiated service is referred to as the RSD that matches the current to-be-initiated service. For example, as shown in FIG. 4(b), the one or more URSP rules received by the terminal apparatus from the H-PCF include URSP 1, URSP 2, URSP 3, a default URSP rule, and the like. Currently, if the terminal apparatus initiates a V2X service, URSP rules that are in the one or more preset URSPs determined by the terminal apparatus and that match the current to-be-initiated service are URSP 1 and URSP 2. For another example, in FIG. 4(e), the terminal apparatus initiates the V2X service, and RSDs that match the current to-be-initiated service and that are in the one or more preset RSDs are RSD 1 to RSD 3. Specifically, when performing URSP matching based on the service information, the terminal may alternatively use another manner, for example, based on domain name information, destination server IP address information and the like corresponding to the to-be-initiated service, or directly perform the matching action by a modem layer without participation of an application layer. This is not limited in this embodiment of this application.

That the S-NSSAI is not supported by a first network means that the S-NSSAI is not in allowed NSSAI of a first network. Alternatively, although the S-NSSAI is in the allowed NSSAI, the allowed NSSAI received by the terminal apparatus may not be updated. Alternatively, after initiating a PDU session establishment request, the terminal apparatus receives a rejection cause value from a network side, and the cause value indicates that the S-NSSAI does not support access temporarily. Alternatively, there is another case in which the S-NSSAI is not supported by the first network. The first network refers to a current network of the terminal.

For example, refer to FIG. 4(b). The preset URSP rules are URSP 1, URSP 2, and URSP 3. Therefore, when executing a URSP matching procedure, the terminal apparatus matches only URSP 1, URSP 2, and URSP 3. When matching URSP 3, the terminal apparatus determines, based on a traffic descriptor (that is, wechat) in URSP 3, that URSP 3 is not a URSP rule that matches a current to-be-initiated V2X service. When matching URSP 1 and URSP 2, the terminal apparatus finds that none of S-NSSAI-1 to S-NSSAI-7 corresponding to URSP 1 and URSP 2 is in the allowed NSSAI of the first network. In this case, the terminal apparatus stops URSP matching, and does not continue to match subsequent URSP rules. In this case, the terminal apparatus may attempt to access at least one required slice.

As described above, indication information included in a last URSP rule (that is, URSP 3) that needs to be matched may be the same as or different from indication information included in a high-priority URSP rule. For example, URSP 3 includes indication information whose value is 1, and both URSP 1 and URSP 2 include indication information whose value is 1. In this case, when completing matching URSP 3, the terminal apparatus may not know whether URSP 3 is the last URSP rule that needs to be matched, and further needs to decapsulate a next URSP rule. If the terminal apparatus determines that the next URSP rule does not include the indication information, it indicates that the next URSP rule is not the preset URSP rule, and the terminal apparatus does not need to match the URSP rule.

For another example, URSP 3 includes indication information whose value is 0, and both URSP 1 and URSP 2 include indication information whose value is 1. In this case, because the indication information included in the last URSP rule (that is, URSP 3) is different from previous URSP rules (URSP 1 and URSP 2), when completing matching URSP 3, the terminal apparatus may learn that URSP 3 is the last URSP rule that needs to be matched. In this way, the terminal apparatus does not need to decapsulate a next URSP rule, operations that need to be performed by the terminal apparatus are reduced, and an implementation procedure is simpler.

For another example, refer to FIG. 4(e). The preset RSD (that is, an RSD in which indication information is located) is RSD 1, RSD 2, RSD 3, RSD 8, and RSD 9. Therefore, when executing a URSP matching procedure, the terminal apparatus matches only RSD 1, RSD 2, RSD 3, RSD 8 and RSD 9. Specifically, when the terminal apparatus matches RSD 8 and RSD 9, it is found that RSD 8 and RSD 9 are not RSDs that match a current to-be-initiated service. When the terminal apparatus matches RSD 1, RSD 2, and RSD 3, it is determined that none of S-NSSAI-1, S-NSSAI-2, and S-NSSAI that are respectively corresponding to RSD 1, RSD 2, and RSD 3 is in allowed NSSAI of a first network, the terminal apparatus stops URSP matching, and does not continue to match subsequent RSDs.

In the slice access method provided by the embodiment of this application, the terminal may receive the indication information from a network apparatus, to trigger URSP matching when a service needs to be initiated, and match only a preset URSP indicated by the indication information, or may not match a preset URSP indicated by the indication information. In this way, a quantity of URSPs that need to be matched can be reduced, and a probability that a terminal service fails because matched slice information is not suitable for a service because the URSP is always matched and a PDU session established based on the slice information cannot support a service that needs to be initiated can be reduced.

S506: The terminal apparatus executes a mobility change procedure.

Optionally, when a slice that needs to be accessed by the terminal apparatus to perform a service is not supported by the first network, the terminal apparatus may perform the mobility change procedure. The terminal apparatus hands over from the first network to a second network or registers with the second network by using the mobility change procedure.

In addition, it is different from a regular mobility management procedure that, in this embodiment of this application, the terminal apparatus may alternatively request, in the second network by using the following registration procedure, to access at least one of the one or more pieces of S-NSSAI (that is, access required by a service), to access at least one required slice. The second network is a network that supports the at least one of the one or more pieces of S-NSSAI.

For a specific handover or registration procedure, refer to the conventional technology. Details are not described herein again.

In a possible implementation, the terminal apparatus performs a mobility change procedure based on one or more of the following information: local configuration, detected broadcast information, and network selection assistance information.

The network selection assistance information includes one or more pieces of the following information:
information about one or more networks that support one or more slices in a target slice set, one or more priorities of the one or more networks, and network slice information respectively supported by the one or more networks.

The target slice set is one or more slices corresponding to target NSSAI, and the target NSSAI includes one or more of the following: NSSAI (that is, requested NSSAI) corresponding to a network slice requested by a terminal apparatus, NSSAI (that is, rejected NSSAI) corresponding to a network slice that rejects access of the terminal apparatus, and NSSAI (that is, allowed NSSAI) corresponding to a network slice that allows access of the terminal apparatus.

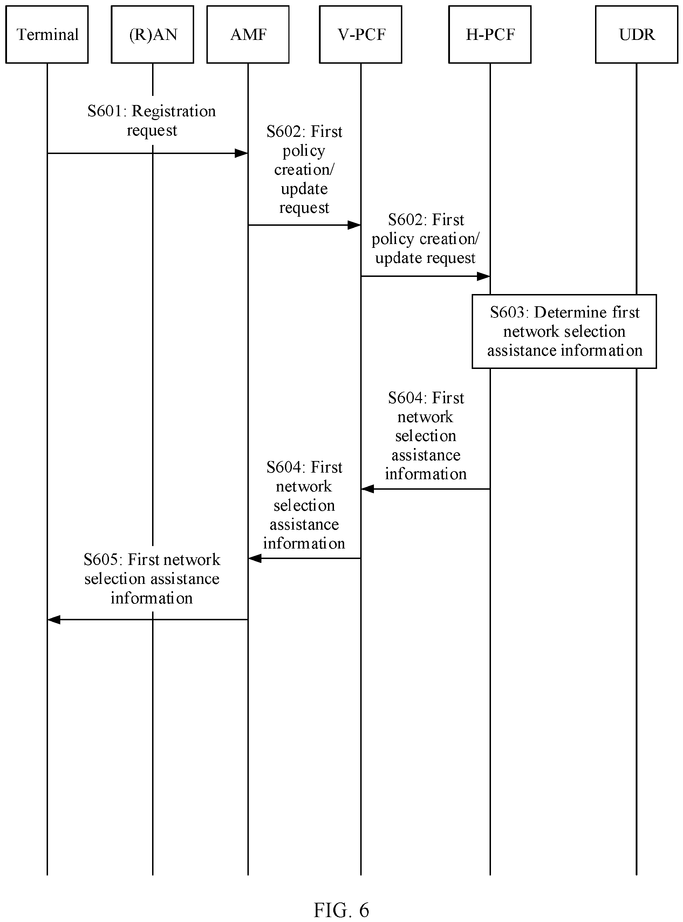

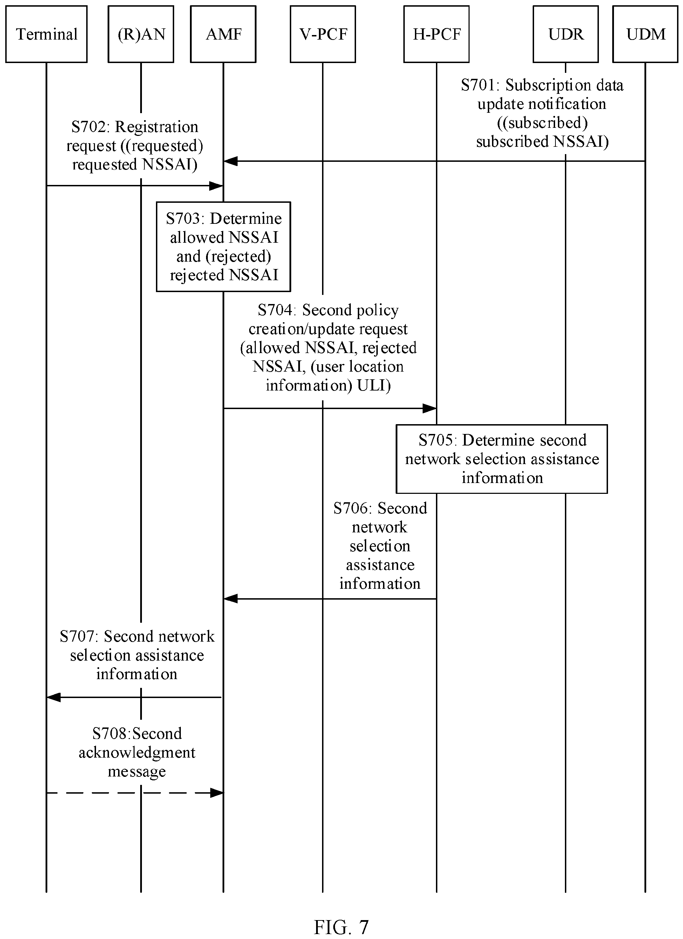

The network selection assistance information in this embodiment of this application may be classified into two types based on different target slices. When the target slice is requested NSSAI, the network selection assistance information is referred to as first network selection assistance information. When the target slice is rejected NSSAI and/or allowed NSSAI, the network selection assistance information is referred to as second network selection assistance information. For specific descriptions of the first network selection assistance information and the second network selection assistance information, refer to the following embodiments corresponding to FIG. 6 and FIG. 7. The general term of the network selection assistance information is still used herein.

The network selection assistance information may be in a form of an S-NSSAI preferred PLMN identifier list (S-NSSAI: Preferred PLMN ID List). Alternatively, the network selection assistance information may be in a form of an S-NSSAI list (Precedence, PLMN ID, Supported S-NSSAI list). Precedence refers to a priority of each PLMN, PLMN ID is an identifier of one or more PLMNs that support one or more slices in the target slice set, and Supported S-NSSAI list is an S-NSSAI list supported by a corresponding PLMN.

For example, if the target NSSAI is requested NSSAI, the target slice set is one or more slices identified by the requested NSSAI, for example, slice 1 to slice 3 (corresponding to S-NSSAI-1 to S-NSSAI-3 respectively). If a list of PLMN identifiers is used to represent the network selection assistance information, the list may be (S-NSSAI-1: PLMN 1, PLMN 2; S-NSSAI-2: PLMN 1, PLMN 3; S-NSSAI-3: PLMN 4, PLMN 2, PLMN 3). Optionally, the list may alternatively include a priority of the one or more PLMNs. For example, the list may be (S-NSSAI-1: PLMN 1 (high priority), PLMN 2 (low priority); S-NSSAI-2: PLMN 1 (high priority), PLMN 3 (low priority); S-NSSAI-3: PLMN 4 (high priority), PLMN 2 (medium priority), PLMN 3 (low priority)). Herein, the priority may also be indicated in another manner, for example, indicated by using a value. A smaller value indicates a higher priority. A larger value indicates a higher priority. This is not limited in this embodiment of this application. Optionally, the list further includes S-NSSAI respectively supported by the one or more PLMNs. If the network selection assistance information is represented in a form of an S-NSSAI list, the list may be (high priority, PLMN 1, S-NSSAI-1, S-NSSAI-2; high priority, PLMN 2, S-NSSAI-1, S-NSSAI-4; low priority, PLMN 3, S-NSSAI-3, S-NSSAI-2).

Detected broadcast information of a surrounding network includes slice information supported by the surrounding network. For example, the broadcast information includes supported slice information broadcast by a neighboring cell.

It may be understood that, when a slice required by the terminal apparatus for executing a service is not supported by a current first network, the terminal apparatus may determine whether a peripheral network supports access of the slice required by the terminal apparatus. When determining that a network (for example, a second network) supports the slice, the terminal apparatus triggers a mobility change procedure to the second network (that is, accesses the second network by using a handover/mobility registration procedure). In addition, the terminal apparatus may continue to request, in the second network, S-NSSAI corresponding to the required slice, that is, request at least one of the one or more pieces of S-NSSAI. For example, as shown in FIG. 4(b), when the terminal apparatus initiates a service and performs URSP matching, the terminal apparatus reads indication information to learn that only URSP 1 and URSP 2 are matched, and no subsequent URSP rules need to be matched. After matching URSP 1 and URSP 2, the terminal apparatus learns that none of S-NSSAI-1 to S-NSSAI-7 required by the service is in allowed NSSAI of a first network. In this case, to access the at least one required slice, the terminal apparatus may perform a mobility change procedure to register with or hand over to a second network that supports the at least one required slice. As shown in FIG. 4(b), the terminal apparatus may register with or hand over to a second network that supports S-NSSAI-1 and S-NSSAI-2.

In the mobility change procedure, the terminal apparatus may send a registration request message to the second network. Specifically, if the foregoing handover manner is used, the terminal apparatus first performs the handover, and then triggers a registration procedure with the second network after the terminal apparatus is handed over from the first network to the second network. Alternatively, if the foregoing registration manner is used, the terminal apparatus directly registers with the second network from the first network by using a registration procedure.

In the registration procedure with the second network, the terminal apparatus may send a registration request to the second network, where the registration request message includes requested NSSAI. The requested NSSAI includes the at least one of the foregoing one or more pieces of S-NSSAI, that is, includes at least one piece of required S-NSSAI. For example, the terminal apparatus matches only S-NSSAI-1 to S-NSSAI-3 in URSP1, and none of the three pieces of S-NSSAI are in allowed NSSAI of the first network. requested NSSAI sent by the terminal apparatus to the second network includes at least one of S-NSSAI-1 to S-NSSAI-3. Optionally, the registration procedure may be further used to update information such as context information of UE in the second network.

It should be noted that, in this embodiment of this application, an execution sequence of the foregoing one or more steps is not limited, for example, an execution sequence of S505 and S506, or an execution sequence of S504 and S505.

In this embodiment of this application, when a session parameter is selected for a PDU session, in addition to the URSP rule and the allowed NSSAI, information in which whether a peripheral network of a current location of the UE supports the required slice is also referred to. In addition, it can be determined whether to trigger a mobility change procedure to an adjacent network. In this way, the terminal apparatus may access the required slice (that is, at least one of slices respectively corresponding to S-NSSAI-1 to S-NSSAI-3) via the second network, and establish a PDU session in the required slice. Because the required slice information (including information such as S-NSSAI and a DNN) is determined based on service information in the URSP matching procedure, the PDU session established based on the required slice information can meet a service requirement of the terminal apparatus. This reduces a probability of a service failure caused by matching of slice information that is not suitable for a service by the terminal apparatus.

In addition, when using the network selection assistance information, the terminal apparatus may further refer to a supporting status of S-NSSAI corresponding to a currently established PDU session in the second network, to avoid impact on a currently ongoing service. For example, if a slice to be accessed by the UE is S-NSSAI 3, and an existing session is a PDU session 1 (corresponding to a parameter S-NSSAI 1) and a PDU session 2 (corresponding to a parameter S-NSSAI 2), when performing the mobility change procedure, in addition to a supporting status of S-NSSAI 3 by the second network, the UE further needs to consider that the second network should support S-NSSAI 1 and S-NSSAI 2 as much as possible.

Certainly, when the slice that needs to be accessed by the terminal apparatus for executing the service is not supported by the first network, the terminal apparatus may not perform S505, to be specific, does not trigger the mobility change procedure to the second network, but abandons the to-be-initiated service, and initiates a corresponding service after subsequently receiving updated allowed NSSAI that includes the required S-NSSAI.

In some other embodiments, a method for determining first network selection assistance information is further provided. Refer to FIG. 6. The method includes the following steps.

S601: A terminal apparatus initiates a registration request to an AMF.

Correspondingly, the AMF receives the registration request from the terminal apparatus.

The registration request may be an initial registration request, a mobility registration request, or another possible registration request. The registration request includes requested NSSAI. The requested NSSAI is determined based on one or more pieces of the following information: configured NSSAI configured by a home network, allowed NSSAI in a previous registration procedure of the terminal apparatus, and other configuration information. The registration request requests, from a network side, to access one or more slices indicated by the requested NSSAI.

S602: The AMF sends a first policy creation/update request to an H-PCF.

Correspondingly, the H-PCF receives the first policy creation/update request from the AMF.

Specifically, the AMF invokes an Npcf_UEPolicyControl_Create/Update Request service of the H-PCF to send the first policy creation/update request to the H-PCF. The first policy creation/update request carries the requested NSSAI (that is, the foregoing target NSSAI) from the terminal apparatus and user location information (user location information, ULI) from a (R)AN. The ULI is, for example, but is not limited to, a cell identity (Cell ID) or a tracking area identity (tracking area identity, TAI).

It should be noted that if the procedure occurs in a roaming scenario, the AMF interacts with the H-PCF via a V-PCF. To be specific, the AMF first sends the first policy creation/update request to the V-PCF, and then the V-PCF forwards the first policy creation/update request to the H-PCF. If the procedure is initiated in a non-roaming scenario, the AMF directly interacts with the H-PCF, that is, directly sends the first policy creation/update request to the H-PCF.

S603: The H-PCF determines first network selection assistance information.

Specifically, the H-PCF determines the first network selection assistance information based on one or more pieces of the following information: user policy subscription data obtained from a UDR, the first policy creation/update request (including the target NSSAI, that is, the requested NSSAI) from the AMF, and local configuration information.

Specifically, the first network selection assistance information includes information about one or more networks that support one or more pieces of S-NSSAI in the requested NSSAI. Optionally, the first network selection assistance information further includes one or more priorities of the one or more networks and/or network slice information respectively supported by the one or more networks.

S604: The H-PCF sends the first network selection assistance information to the AMF.

Correspondingly, the AMF receives the first network selection assistance information from the H-PCF.

Specifically, the H-PCF returns an Npcf_UEPolicyControl_Create/Update Response service response and sends the first network selection assistance information to the AMF.

It may be understood that if this step occurs in a roaming scenario, the H-PCF sends the first network selection assistance information to the AMF via the V-PCF. If this step occurs in a non-roaming scenario, the H-PCF directly sends the first network selection assistance information to the AMF.

S605: The AMF sends the first network selection assistance information to the terminal apparatus.

Correspondingly, the terminal apparatus receives the first network selection assistance information from the AMF.

Optionally, the AMF sends a registration response message to the terminal apparatus, where the registration response message includes the first network selection assistance information.

It may be understood that after receiving the first network selection assistance information, the terminal apparatus may store the first network selection assistance information. Therefore, when a current network does not support a required slice, a new network that supports at least one required slice is determined based on the first network selection assistance information, and is handed over to or registered with the new network by using a mobility change procedure. In this way, the terminal apparatus may access the at least one required slice via the new network.

In some other embodiments, another method for determining second network selection assistance information is further provided. Refer to FIG. 7. The method includes the following steps.

S701: A UDM sends a subscription data update notification to an AMF.

Correspondingly, the AMF receives the subscription data update notification from the UDM, where the subscription data update notification may carry updated and subscribed network slice selection assistance information (Subscribed NSSAI) by a user.

In a possible implementation, the UDM sends the subscription data update notification to the AMF by using an Nudm_SDM_Notify service.

S702: A terminal apparatus sends a registration request to the AMF.

Correspondingly, the AMF receives the registration request from the terminal apparatus.

The registration request is the same as the registration request in FIG. 6. The registration request may carry requested NSSAI that the terminal apparatus requests to access.

In this embodiment of this application, an execution sequence of S701 and S702 is not limited. In other words, S701 may be performed first, or S702 may be performed first. In addition, S701 and S702 may be simultaneously performed, or only S701 or S702 may be performed.

S703: The AMF determines a list of slices allowed NSSAI allowed to be accessed by the terminal apparatus and a list of slices rejected NSSAI rejected to be accessed by the terminal apparatus.

Optionally, the AMF determines the allowed NSSAI and the rejected NSSAI based on one or more pieces of the following information: local configuration, an NSSF notification, the subscribed NSSAI, and slice information supported by a current tracking area (TA).

The AMF may also update the previously determined allowed NSSAI and rejected NSSAI. For example, the AMF determines, based on the local configuration/NSSF notification message and/or other information, that some or all slices are congested or slices are unavailable, and the AMF needs to guide the terminal apparatus to access by using another slice, and updates the allowed NSSAI and rejected NSSAI information of the terminal apparatus.

S704: The AMF sends a second policy creation/update request to an H-PCF.

Correspondingly, the H-PCF receives the second policy creation/update request from the AMF.

Optionally, the AMF invokes an Npcf_UEPolicyControl_Create/Update Request service of the H-PCF and sends the second policy creation/update request to the H-PCF. The second policy creation/update request may carry one or more pieces of the following information: allowed NSSAI, rejected NSSAI, and ULI that are obtained through decision by the AMF.

It may be understood that if the scenario is a roaming scenario, the AMF interacts with the H-PCF via a V-PCF. In a non-roaming scenario, the AMF directly interacts with the H-PCF.

S705: The H-PCF determines second network selection assistance information based on the second policy creation/update request.

Specifically, the H-PCF executes a policy decision based on one or more pieces of the following information, and determines the second network selection assistance information: the allowed NSSAI, rejected NSSAI, ULI, policy subscription information in a UDR, and the local configuration. For example, the second network selection assistance information is determined based on the rejected NSSAI, where the second network selection assistance information includes one or more pieces of network information that supports one or more pieces of S-NSSAI of the rejected NSSAI; and/or the second network selection assistance information is determined based on the allowed NSSAI, where the second network selection assistance information includes one or more pieces of network information that supports one or more pieces of S-NSSAI of the allowed NSSAI. The second network selection assistance information includes one or more pieces of network information that supports one or more pieces of S-NSSAI of the rejected NSSAI, and/or one or more pieces of network information that supports one or more pieces of S-NSSAI of the allowed NSSAI. Optionally, the second network selection assistance information further includes one or more priorities of the one or more networks and/or slice information supported by each network.

For a specific form of the second network selection assistance information, refer to the foregoing embodiment. Details are not described herein again.

S706: The H-PCF sends the second network selection assistance information to the AMF.

Correspondingly, the AMF receives the second network selection assistance information from the H-PCF.

In a possible implementation, the H-PCF returns an Npcf UEPolicyControl Create/Update Response service response, and sends the second network selection assistance information to the AMF. In a roaming scenario, the AMF forwards the second network selection assistance information to the H-PCF via the V-PCF. In a non-roaming scenario, the AMF directly sends the second network selection assistance information to the H-PCF.

S707: The AMF sends the second network selection assistance information to the terminal apparatus.

Correspondingly, the terminal apparatus receives the second network selection assistance information from the AMF.

Optionally, the AMF sends the second network selection assistance information to the terminal apparatus by using a user configuration update procedure (configuration update request) or a registration response message.

S708: The terminal apparatus sends a second acknowledgment message (ACK) to the AMF.

Correspondingly, the terminal apparatus receives the second acknowledgment message from the AMF.

This step is an optional step. After receiving the second network selection assistance information, the terminal apparatus sends the second acknowledgment message to the AMF, to indicate that the second network selection assistance information is received.

It may be understood that the methods and functions implemented by the devices in the foregoing method embodiments may alternatively be implemented by using a chip that may be used in a device.

The solutions provided in the embodiments of this application are described above mainly from a perspective of interaction between different network elements. It may be understood that to implement the foregoing functions, the devices include hardware structures and/or software modules corresponding to the functions. With reference to the units and algorithm steps described in embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, function unit division may be performed on the terminal apparatus, the policy network element or the like according to the examples of the foregoing method. For example, function units may be obtained through division based on corresponding functions, or two or more functions may be integrated into one processing unit. The integrated unit may be implemented in a form of hardware, or may be implemented in a form of a software functional unit. It should be noted that, in this embodiment of this application, division into the units is an example, and is merely a logical function division. In actual implementation, another division manner may be used.

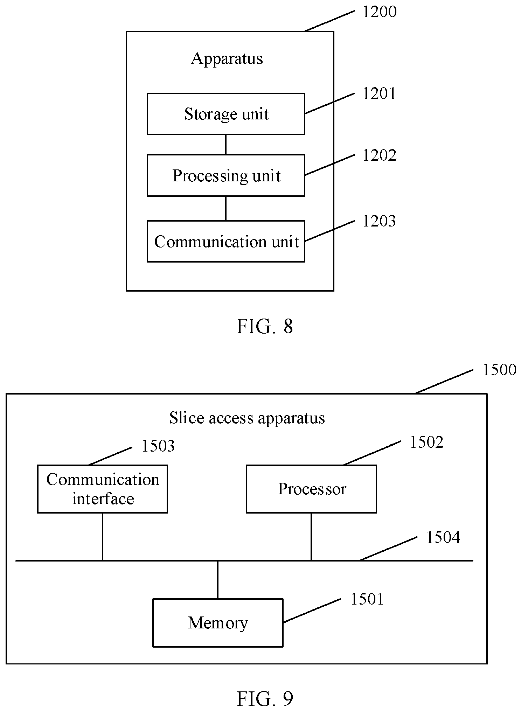

FIG. 8 is a schematic block diagram of a slice access apparatus according to an embodiment of this application. The apparatus 1200 may exist in a form of software, or may be hardware, for example, may be a chip that can be used in a hardware device. The apparatus 1200 includes a processing unit 1202 and a communication unit 1203.

If the apparatus 1200 is the foregoing terminal apparatus, the processing unit 1202 may be configured to support the apparatus 1200 in performing S505 and S506 shown in FIG. 5, and/or another process of the solution described in this specification. The communication unit 1203 is configured to support communication between the apparatus 1200 and another network element (for example, a policy network element H-PCF), for example, to perform S502 and S503 shown in FIG. 5, S601 and S605 shown in FIG. 6, S702, S707, and S708 shown in FIG. 7, and/or other steps in the solution described in this specification.

If the apparatus 1200 is a policy network element (that is, the network apparatus mentioned above), the processing unit 1202 may be configured to support the apparatus 1200 in performing S705 shown in FIG. 7, and/or another process of the solution described in this specification. The communication unit 1203 is configured to support communication between the apparatus 1200 and another network element (for example, a terminal), for example, to perform S704 and S706 shown in FIG. 7, and/or other steps in the solution described in this specification.

Optionally, the apparatus 1200 may further include a storage unit 1201, configured to store program code and data of the apparatus 1200. The data may include but is not limited to original data, intermediate data, or the like.

In a possible manner, the processing unit 1202 may be a processor or a controller, such as a central processing unit (Central Processing Unit, CPU), a general-purpose processor, digital signal processing (Digital Signal Processing, DSP), an application-specific integrated circuit (Application-Specific Integrated Circuit, ASIC), a field-programmable gate array (Field-Programmable Gate Array, FPGA), or another programmable logic device, a transistor logic device, a hardware component, or any combination thereof. The processing unit can implement or execute various example logical blocks, modules, and circuits described with reference to content disclosed in embodiments of this application. Alternatively, the processor may be a combination of processors implementing a computing function, for example, a combination of one or more microprocessors, or a combination of the DSP and a microprocessor. The communication unit 1203 may be a transceiver, a transceiver circuit, a communication interface, or the like. The storage unit 1201 may be a memory.

In a possible manner, when the processing unit 1202 is a processor, the communication unit 1203 is a communication interface, and the storage unit 1201 is a memory, a structure of the slice access apparatus in this embodiment of this application may be shown in FIG. 9.

FIG. 9 is a simplified schematic diagram of a possible design structure of a slice access apparatus according to an embodiment of this application. The slice access apparatus 1500 includes a processor 1502, a communication interface 1503, and a memory 1501. Optionally, the slice access apparatus 1500 may further include a bus 1504. The communication interface 1503, the processor 1502, and the memory 1501 may be connected to each other through the bus 1504. The bus 1504 may be a peripheral component interconnect (Peripheral Component Interconnect, PCI) bus, an extended industry standard architecture (Extended Industry Standard Architecture, EISA) bus, or the like. The bus 1504 may be divided into an address bus, a data bus, a control bus, and the like. For ease of representation, only one line is used to represent the bus in FIG. 9, but this does not mean that there is only one bus or only one type of bus.

A person of ordinary skill in the art may understand that all or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid-State Drive, SSD)), or the like.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units (for example, a terminal). Some or all of the units may be selected based on actual requirements to achieve the objectives of the solutions of the embodiments.

In addition, function units in embodiments of this application may be integrated into one processing unit, or each of the function units may exist alone physically, or two or more units are integrated into one unit. The integrated unit may be implemented as hardware, or may be implemented as a combination of hardware and a software functional unit.

Based on the foregoing descriptions of the implementations, a person skilled in the art may clearly understand that this application may be implemented by software in addition to necessary universal hardware or by hardware only. In most circumstances, the former is a better implementation. Based on such an understanding, the technical solutions in this application essentially or the part contributing to the conventional technologies may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in embodiments of this application.

The foregoing descriptions are merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A slice access method, comprising:
receiving one or more user route selection policy rules URSP rules from a network apparatus, wherein at least one URSP rule of the URSP rules comprises indication information, and the indication information indicates to match one or more preset URSP rules or match one or more preset route selection descriptors RSDs; and
performing URSP matching according to the one or more URSP rules.

2. The slice access method according to claim 1, wherein the preset URSP rule comprises a non-wildcard URSP rule; or the preset URSP rule comprises a first URSP rule and one or more second URSP rules; or the preset URSP rule comprises the first URSP rule, wherein
the first URSP rule is a URSP rule in which the indication information is located, and the second URSP rule is a URSP rule whose priority is higher than that of the first URSP rule; and
the preset RSD comprises a first RSD and one or more second RSDs; or the preset RSD comprises the first RSD, wherein
the first RSD is an RSD in which the indication information is located, and the second RSD is an RSD whose priority is higher than that of the first RSD.

3. The slice access method according to claim 1 or 2, wherein the performing URSP matching according to the one or more URSP rules comprises:
stopping URSP matching if none of one or more pieces of single network slice selection assistance information S-NSSAI corresponding to a URSP rule that is in the one or more preset URSP rules and that matches a current to-be-initiated service is supported by a first network; or
stopping URSP matching if none of one or more pieces of S-NSSAI corresponding to an RSD that matches a current to-be-initiated service and that is in the one or more preset RSDs is supported by a first network.

4. The slice access method according to claim 3, wherein the method further comprises:
accessing a second network by using a mobility change procedure, and requesting at least one of the one or more pieces of S-NSSAI in the second network, wherein
the second network is a network that supports the at least one of the one or more pieces of S-NSSAI.

5. The slice access method according to any one of claims 1 to 4, wherein the method further comprises: obtaining network selection assistance information, wherein the network selection assistance information comprises one or more pieces of the following information:
information about one or more networks that support one or more slices in a target slice set, one or more priorities of the one or more networks, and network slice information respectively supported by the one or more networks, wherein
the target slice set is one or more slices corresponding to target NSSAI, and the target NSSAI comprises one or more of the following: NSSAI corresponding to a network slice requested by a terminal apparatus, NSSAI corresponding to a network slice that rejects access of the terminal apparatus, and NSSAI corresponding to a network slice that allows access of the terminal apparatus.

6. The slice access method according to claim 5, wherein the accessing a second network by using a mobility change procedure comprises: performing the mobility change procedure based on the network selection assistance information, to access the second network.

7. A slice access method, comprising:
determining, by a network apparatus, indication information, wherein the indication information indicates to match one or more preset URSP rules or match one or more preset route selection descriptors RSDs; and
sending the indication information to a terminal apparatus.

8. The slice access method according to claim 7, wherein the preset URSP rule comprises a non-wildcard URSP rule; or the preset URSP rule comprises a first URSP rule and one or more second URSP rules; or the preset URSP rule comprises the first URSP rule, wherein
the first URSP rule is a URSP rule in which the indication information is located, and the second URSP rule is a URSP rule whose priority is higher than that of the first URSP rule; and
the preset RSD comprises a first RSD and one or more second RSDs; or the preset RSD comprises the first RSD, wherein
the first RSD is an RSD in which the indication information is located, and the second RSD is an RSD whose priority is higher than that of the first RSD.

9. The slice access method according to claim 7 or 8, wherein the determining, by a network apparatus, indication information comprises: determining the indication information based on one or more pieces of information: user subscription information, a location of the terminal apparatus, and pre-configuration information.

10. The slice access method according to any one of claims 7 to 9, wherein the sending the indication information to a terminal apparatus comprises: sending one or more URSP rules to the terminal apparatus, wherein at least one of the one or more URSP rules comprises the indication information.

11. The slice access method according to any one of claims 7 to 10, wherein the method further comprises:
obtaining target NSSAI;
determining network selection assistance information based on the target NSSAI; and
sending the network selection assistance information to the terminal apparatus, wherein
the network selection assistance information comprises one or more pieces of the following information: information about one or more networks that support one or more slices in a target slice set, one or more priorities of the one or more networks, and network slice information respectively supported by the one or more networks, wherein
the target slice set is one or more slices corresponding to target NSSAI, and the target NSSAI comprises one or more of the following: NSSAI corresponding to a network slice requested by the terminal apparatus, NSSAI corresponding to a network slice that rejects access of the terminal apparatus, and NSSAI corresponding to a network slice that allows access of the terminal apparatus.

12. A slice access apparatus, comprising:
a communication interface, configured to receive one or more user route selection policy rules URSP rules from a network apparatus, wherein at least one URSP rule of the URSP rules comprises indication information, and the indication information indicates to match one or more preset URSP rules or match one or more preset route selection descriptors RSDs; and
a processor, configured to perform URSP matching according to the one or more URSP rules.

13. The slice access apparatus according to claim 12, wherein the preset URSP rule comprises a non-wildcard URSP rule; or the preset URSP rule comprises a first URSP rule and one or more second URSP rules; or the preset URSP rule comprises the first URSP rule, wherein
the first URSP rule is a URSP rule in which the indication information is located, and the second URSP rule is a URSP rule whose priority is higher than that of the first URSP rule; and
the preset RSD comprises a first RSD and one or more second RSDs; or the preset RSD comprises the first RSD, wherein
the first RSD is an RSD in which the indication information is located, and the second RSD is an RSD whose priority is higher than that of the first RSD.

14. The slice access apparatus according to claim 12 or 13, wherein that the processor is configured to perform URSP matching according to the one or more URSP rules comprises:
stopping URSP matching if none of one or more pieces of single network slice selection assistance information S-NSSAI corresponding to a URSP rule that is in the one or more preset URSP rules and that matches a current to-be-initiated service is supported by a first network; or
stopping URSP matching if none of one or more pieces of S-NSSAI corresponding to an RSD that matches a current to-be-initiated service and that is in the one or more preset RSDs is supported by a first network.

15. The slice access apparatus according to claim 14, wherein the processor is further configured to access a second network by using a mobility change procedure, and request at least one of the one or more pieces of S-NSSAI in the second network, wherein
the second network is a network that supports the at least one of the one or more pieces of S-NSSAI.

16. The slice access apparatus according to any one of claims 12 to 15, wherein the processor is further configured to obtain network selection assistance information, wherein the network selection assistance information comprises one or more pieces of the following information:
information about one or more networks that support one or more slices in a target slice set, one or more priorities of the one or more networks, and network slice information respectively supported by the one or more networks, wherein
the target slice set is one or more slices corresponding to target NSSAI, and the target NSSAI comprises one or more of the following: NSSAI corresponding to a network slice requested by a terminal apparatus, NSSAI corresponding to a network slice that rejects access of the terminal apparatus, and NSSAI corresponding to a network slice that allows access of the terminal apparatus.

17. The slice access apparatus according to claim 16, wherein that the processor is configured to access a second network by using a mobility change procedure comprises: performing the mobility change procedure based on the network selection assistance information, to access the second network.

18. A slice access apparatus, comprising:
a processor, configured to determine indication information, wherein the indication information indicates to match one or more preset URSP rules or match one or more preset route selection descriptors RSDs; and
a communication interface, configured to send the indication information to a terminal apparatus.

19. The slice access apparatus according to claim 18, wherein the preset URSP rule comprises a non-wildcard URSP rule; or the preset URSP rule comprises a first URSP rule and one or more second URSP rules; or the preset URSP rule comprises the first URSP rule, wherein
the first URSP rule is a URSP rule in which the indication information is located, and the second URSP rule is a URSP rule whose priority is higher than that of the first URSP rule; and
the preset RSD comprises a first RSD and one or more second RSDs; or the preset RSD comprises the first RSD, wherein
the first RSD is an RSD in which the indication information is located, and the second RSD is an RSD whose priority is higher than that of the first RSD.

20. The slice access apparatus according to claim 18 or 19, wherein that the processor is configured to determine indication information comprises: determining the indication information based on one or more pieces of information: user subscription information, a location of the terminal apparatus, and pre-configuration information.

21. The slice access apparatus according to any one of claims 18 to 20, wherein that the communication interface is configured to send the indication information to a terminal apparatus comprises: sending one or more URSP rules to the terminal apparatus, wherein at least one of the one or more URSP rules comprises the indication information.

22. The slice access apparatus according to any one of claims 18 to 21, wherein the processor is further configured to:
obtain target NSSAI;
determine network selection assistance information based on the target NSSAI; and
send the network selection assistance information to the terminal apparatus, wherein
the network selection assistance information comprises one or more pieces of the following information: information about one or more networks that support one or more slices in a target slice set, one or more priorities of the one or more networks, and network slice information respectively supported by the one or more networks, wherein
the target slice set is one or more slices corresponding to target NSSAI, and the target NSSAI comprises one or more of the following: NSSAI corresponding to a network slice requested by the terminal apparatus, NSSAI corresponding to a network slice that rejects access of the terminal apparatus, and NSSAI corresponding to a network slice that allows access of the terminal apparatus.

23. A computer-readable storage medium, comprising a program or instructions, wherein when the program or the instructions are executed, the slice access method according to any one of claims 1 to 6 is implemented, or the slice access method according to any one of claims 7 to 11 is implemented.

24. A slice access system, comprising the slice access apparatus according to any one of claims 12 to 17 and the slice access apparatus according to any one of claims 18 to 22.
